(19) **Europäisches Patentamt**

**European Patent Office**

**Office européen des brevets**

(11) **EP 1 456 302 B1**

(12) **FASCICULE DE BREVET EUROPEEN**

(45) Date de publication et mention
de la délivrance du brevet:
**01.03.2006 Bulletin 2006/09**

(51) Int Cl.:
*C08L 101/00* (2006.01)    *C08G 83/00* (2006.01)
*C08L 77/00* (2006.01)

(21) Numéro de dépôt: **02799816.0**

(22) Date de dépôt: **16.12.2002**

(86) Numéro de dépôt international:
**PCT/FR2002/004367**

(87) Numéro de publication internationale:
**WO 2003/051998 (26.06.2003 Gazette 2003/26)**

(54) **COMPOSITION POLYMERE THERMOPLASTIQUE COMPRENANT UN POLYMERE HYPERBRANCHE, ET ARTICLES REALISES A PARTIR DE CETTE COMPOSITION**

THERMOPLASTISCHE ZUSAMMENSETZUNG, WELCHE EINEN HYPERVERZWEIGTEN POLYMER ENTHÄLT, UND DARAUS HERGESTELLTE GEGENSTÄNDE

THERMOPLASTIC POLYMER COMPOSITION COMPRISING A HYPERBRANCHED POLYMER AND ARTICLES MADE USING SAID COMPOSITION

(84) Etats contractants désignés:
**AT BE BG CH CY CZ DE DK EE ES FI FR GB GR IE IT LI LU MC NL PT SE SI SK TR**

(30) Priorité: **17.12.2001 FR 0116322**
**17.01.2002 FR 0200545**

(43) Date de publication de la demande:
**15.09.2004 Bulletin 2004/38**

(73) Titulaire: **Rhodianyl**
**92512 Boulogne-Billancourt Cédex (FR)**

(72) Inventeurs:
• **VARLET, Joel**
**F-69570 Dardilly (FR)**
• **CLEMENT, Florence**
**69510 YZERON (FR)**

• **TOURAUD, Franck**
**Hameau de Normandie**
**27200 VERNON (FR)**
• **ROCHAT, Sandrine**
**F-69100 Villeurbanne (FR)**
• **SCHERBAKOFF, Natalia**
**F-69390 Vourles (FR)**
• **SASSI, Jean-François**
**42800 Saint-Romain en Juarez (FR)**

(74) Mandataire: **Esson, Jean-Pierre**
**Rhodia Services,**
**Direction de la Propriété Industrielle,**
**Centre de Recherches de Lyon**
**BP 62**
**85, avenue des Frères Perret**
**69192 Saint-Fons Cédex (FR)**

(56) Documents cités:
**FR-A- 2 793 252**

**Description**

Le domaine de l'invention est celui des compositions polymères thermoplastiques comprenant une matrice polymère thermoplastique et au moins un additif modificateur du comportement rhéologique.

Au sens du présent exposé, le terme "polymère" désigne aussi bien un homopolymère qu'un copolymère.

Les polymères thermoplastiques sont des matières premières susceptibles d'être transformées par moulage, moulage par injection, injection soufflage, extrusion, extrusion/soufflage ou filage, notamment en de multiples articles tels que des pièces (par exemple pour carrosserie) soufflées, extrudées, ou moulées, des fils, des fibres ou des films...

Il existe au moins deux contraintes majeures dans toutes ces filières de transformation de polymère thermoplastique.

La première de ces contraintes est que les polymères thermoplastiques mis en oeuvre doivent être caractérisés, à l'état fondu, par une viscosité ou un comportement rhéologique compatible avec les procédés de mise en forme sus-visés. Ces polymères thermoplastiques doivent être suffisamment fluides lorsqu'ils sont en fusion, pour pouvoir être acheminés et manipulés aisément et rapidement dans certaines machines de mise en forme.

L'autre contrainte qui pèse sur les compositions polymères thermoplastiques est liée aux qualités mécaniques qu'ils doivent présenter après avoir été fondus, mis en forme et durcis par refroidissement. Ces qualités mécaniques sont notamment la résistance aux chocs, le module en flexion, la contrainte à la rupture en flexion, entre autres.

D'ailleurs, il est courant, pour améliorer les propriétés mécaniques des polymères thermoplastiques, de leur adjoindre des charges (fibres ou fils) de renfort, par exemple, minérales, en verre, en carbone, pour former des matériaux composites.

L'un des problèmes techniques posés eu égard à ces deux contraintes : comportement rhéologique à l'état fondu et propriétés mécaniques du produit mis en forme et à l'état solidifié, est qu'elles sont a priori antinomiques.

En effet, pour diminuer la viscosité à l'état fondu, il est bien connu de sélectionner des polymères thermoplastiques ayant de faibles masses molaires. Mais ce gain en matière de rhéologie se fait au détriment des qualités mécaniques du polymère mis en forme et durci.

Pour tenter de corriger cela, il est également de pratique courante d'incorporer dans des matrices polymères thermoplastiques, divers additifs propres à modifier leur comportement rhéologique à l'état fondu. Ces additifs sont d'autant plus utiles lorsque les polymères comprennent des charges de renfort.

Le dilemme auquel on est confronté avec ces additifs est qu'ils doivent être à la fois inertes ou non réactifs avec la matrice pour ne pas induire de modifications profondes de la structure chimique (par exemple réticulation), tout en étant dispersibles dans cette matrice pour lui apporter les fonctionnalités requises, de façon homogène.

Or, la première exigence de non réactivité aurait plutôt tendance à renvoyer vers des molécules d'additifs non compatibles avec celles de la matrice, tandis que la deuxième exigence de dispersibilité oriente plutôt l'homme de l'art vers des additifs de structure compatible à celle de la matrice.

Par ailleurs, les additifs modifiant la rhéologie doivent être en mesure d'améliorer la capacité du polymère thermoplastique et à être moulé, injecté ou extrudé.

S'agissant des polyamides auxquels on s'intéresse plus particulièrement dans le cadre de la présente invention, il a été proposé d'utiliser des polymères hyperbranchés, et notamment des copolyamides hyperbranchés, à titre d'additifs modificateurs de la rhéologie dans des matrices polyamides thermoplastiques.

La demande de brevet français N°2 793 252 décrit des copolyamides hyperbranchés (PAHB) par exemple du type de ceux à terminaisons acide carboxylique, obtenus par copolycondensation en phase fondue de l'acide 1,3,5-benzène tricarboxylique (BTC) : molécule coeur de type $R^1$-B''$_3$, avec B'' = COOH, de l'acide 5-aminoisophtalique (AIPA) : molécule de branchement de type A-R-B$_2$, avec A = NH$_2$ et B = COOH et de l'ε-caprolactame (CL) : espaceur de type A'-R'-B' avec A' = NH$_2$ et B' = COOH). Les polymères hyperbranchés ont généralement une taille variant de quelques nanomètres à plusieurs dizaines de nanomètres.

Ces polymères hyperbranchés peuvent être fonctionnalisés notamment par des chaînes grasses ou des chaînes hydrophobes et/ou hydrophiles, aux fins d'être utilisés par exemple comme agent modificateur de propriétés de surface de polymères linéaires ou branchés, de préférence des polyamides. Ces fonctionnalités peuvent être apportées sur le polymère hyperbranché en faisant intervenir dans la copolycondensation en phase fondue, un monomère stoppeur de chaînes de type R'''-A.

Dans cet état de la technique, l'un des objectifs essentiels de la présente invention est de proposer un additif modificateur du comportement rhéologique de polymères thermoplastiques qui soit :

- apte à permettre la modification contrôlée des propriétés rhéologiques de la composition thermoplastique, en particulier la viscosité à l'état fondu (fluidification), et ce sans porter atteinte aux propriétés mécaniques du polymère thermoplastique mis en forme et durci (résistance aux chocs),
- de préférence non réactif vis-à-vis de la matrice thermoplastique, avantageusement en polyamide, c'est à dire non susceptible d'entraîner des modifications de structure chimique sur la matrice thermoplastique, se traduisant par exemple par des diminutions de la masse molaire de la matrice,

- de préférence aisément dispersible dans cette matrice.

Un autre objectif de l'invention est de fournir une composition polymère thermoplastique comprenant une matrice thermoplastique et au moins un additif choisi parmi les modificateurs du comportement rhéologique à l'état fondu, de telle sorte que la composition ait une fluidité à l'état fondu adaptée aux opérations de moulage et d'injection (remplissage complet du moule), sans porter atteinte aux propriétés mécaniques, et en particulier à la résistance aux chocs.

Un autre objectif de la présente invention est de fournir une composition polymère thermoplastique adaptée aux différentes techniques de mise en forme à l'état fondu : moulage par injection, injection/soufflage, extrusion/soufflage, filmage, extrusion, filage, ayant par ailleurs une haute résistance mécanique et éventuellement une bonne transparence (faible cristallinité).

Un autre objectif de l'invention est de fournir une composition polymère thermoplastique ayant les qualités rhéologiques (à l'état fondu) et mécaniques requises dans l'industrie de transformation du plastique, sans que l'adjuvantation réalisée pour l'amélioration de ces propriétés ne soit trop coûteuse et perturbe les autres propriétés des thermoplastiques.

Un autre objectif de l'invention est de fournir un additif polymère hyperbranché modificateur du comportement rhéologique apte à modifier de façon contrôlée et optimisée le comportement rhéologique à l'état fondu de compositions polymères thermoplastiques.

Un autre objectif essentiel de l'invention est de fournir des articles obtenus par transformation (moulage, moulage par injection, injection/soufflage, extrusion/soufflage, extrusion ou filage) de la composition telle que définie dans les objectifs ci-dessus.

Ces objectifs, parmi d'autres, sont atteints par la présente invention qui découle de la sélection judicieuse et avantageuse que les inventeurs ont eu le mérite de faire, en retenant comme additif modificateur du comportement rhéologique à l'état fondu des polymères hyperbranchés spécifiques.

D'où il s'ensuit que la présente invention concerne en premier lieu une composition polymère thermoplastique caractérisée en ce qu'elle comprend :

☐ une matrice M à base d'au moins un polymère thermoplastique,

☐ et au moins un additif polymère hyperbranché modificateur du comportement rhéologique comportant au moins un polymère :

➢ fonctionnalisé,
➢ hyperbranché
➢ au moins 50% des groupements terminaux de ce polymère hyperbranché sont fonctionnalisés par $R^2$,
➢ $R^2$ étant un radical hydrocarboné substitué ou non, du genre silicone, alkyle linéaire ou ramifié, aromatique, arylalkyle, alkylaryle ou cycloaliphatique pouvant comprendre une ou plusieurs insaturations et/ou un ou plusieurs hétéroatomes.

Par polymère hyperbranché, on entend une structure polymérique ramifiée obtenue par polymérisation en présence de composés ayant une fonctionnalité supérieure à 2, et dont la structure n'est pas parfaitement contrôlée. Il s'agit souvent de copolymères statistiques. Les polymère hyperbranchés peuvent par exemple être obtenus par réaction entre, notamment, des monomères plurifonctionnels, par exemple trifonctionnels et bifonctionnels, chacun des monomères étant porteur d'au moins deux fonctions réactives différentes de polymérisation.

Avantageusement le polymère hyperbranché de l'invention est choisi parmi les polyesters, les polyesteramides et les polyamides hyperbranchés.

L'additif polymère hyperbranché de l'invention est de préférence un polyamide hyperbranché comportant au moins un copolyamide hyperbranché du type de ceux obtenus par réaction entre :

• au moins un monomère de formule (I) suivante :

$$(I) \qquad A\text{-}R\text{-}B_f$$

dans laquelle A est une fonction réactive de polymérisation d'un premier type, B est une fonction réactive de polymérisation d'un second type et capable de réagir avec A, R est une entité hydrocarbonée comportant éventuellement des hétéroatomes, et f est le nombre total de fonctions réactives B par monomère : $f \geq 2$, de préférence $2 \leq f \leq 10$ ;

- éventuellement au moins un monomère d'espacement bifonctionnel de formule (II) suivante :

$$(II) \qquad A'\text{-}R'\text{-}B'$$

ou les lactames correspondants,
dans laquelle A', B', R' ont la même définition que celle donnée ci-dessus respectivement pour A, B, R dans la formule (I) ;

- éventuellement au moins un monomère "coeur" de formule (III) :

$$(III) \qquad R^1(B'')_n$$

dans laquelle :

- $R^1$ est un radical hydrocarboné substitué ou non, du genre silicone, alkyle linéaire ou ramifié, aromatique, aryle, arylalkyle ou cycloaliphatique pouvant comprendre des insaturations et/ou des hétéroatomes ;
- B'' est une fonction réactive de même nature que B ou B' ;
- $n \geq 1$, de préférence $1 \leq n \leq 100$ ;

- et au moins un monomère de fonctionnalisation "limiteur de chaîne" répondant à la formule (IV) :

$$(IV) \quad R^2\text{-}A''$$

dans laquelle :

- A'' est une fonction réactive de même nature que A ou A' ;

De préférence, la composition selon l'invention est exempte d'additifs polymère hyperbranché entraînant une diminution de la masse molaire de la matrice M supérieure ou égale à 7% par rapport à une composition témoin comprenant la même matrice M non additivée par du polymère hyperbranché, la mesure de masse molaire étant effectuée selon un protocole P déterminé. Le détail du protocole P de mesure de la masse molaire est donné dans les exemples ci-après.

Conformément à l'invention, l'additif polymère hyperbranché fonctionnalisé a donc avantageusement pour caractéristique, une aptitude à modifier le comportement rhéologique d'une matrice polymère thermoplastique, sans porter atteinte à son intégrité structurelle, et en particulier sans diminuer de manière conséquente sa masse molaire. Cela signifie que l'additif ne semble pas réagir avec la matrice.

Selon la présente invention, la masse molaire est définie comme le maximum de la distribution des masses molaires de la matrice polymère additionnée de polymère hyperbranché fonctionnalisé, en équivalent Polystyrène, par Chromatographie par Perméation de Gel (GPC), en détection par réfractométrie, comme cela est défini dans le protocole P donné en détail ci-après.

La mesure de masse molaire est effectuée sur la composition à analyser et sur la composition témoin, extrudées, solidifiées puis éventuellement mis sous forme de granulés.

Le protocole P susvisé de mesure de masse molaire de la matrice M dans une composition à analyser et dans une composition témoin, fait intervenir une extrusion, qui conduit à la production de joncs. Les joncs (préalablement découpés en granulés) sont ensuite soumis à la détermination de masse molaire proprement dite. Ce protocole P de mesure de masse molaire des compositions selon l'invention et des compositions témoin, est le suivant :

1/ Compositions matrice M/polymère hyperbranché fonctionnalisé

La matrice M, notamment polyamide et le polymère hyperbranché fonctionnalisé se présentent sous forme broyée ou concassée en poudre, paillettes ou granulés, et sont ensuite prémélangés.

Le mélange est introduit dans une extrudeuse bi-vis.

Ce mélange est fondu dans l'extrudeuse à une température Q d'environ 30°C supérieure à la température de fusion $Q_{fusion}$ de la matrice M.

L'homogénéisation de M/polymère hyperbranché est ainsi réalisée pendant 5 min et on recueille en sortie d'extrudeuse des joncs mis ensuite sous forme de granulés.

La mesure de masse molaire proprement dite est réalisée sur les granulés par chromatographie par perméation de gel (GPC) dans le dichlorométhane après dérivatisation du polyamide par l'anhydride trifluoroacétique, par rapport à des étalons de polystyrène. La technique de détection utilisée est la réfractométrie.

2/ Compositions témoins matrice M sans additif polymère hyperbranché

Pour chaque composition M/ polymère hyperbranché donnée, on procède à une mesure de masse molaire de la même matrice M sur une composition comprenant la matrice M sans additif polymère hyperbranché.

La méthode est effectuée sur des granulés de polymère M, notamment de polyamide obtenus de la même façon que celle indiquée au point 1 supra, à la différence près que les granulés ne contiennent pas d'additif polymère hyperbranché.

S'agissant de la composition M + polymère hyperbranché fonctionnalisé de l'invention, il peut être noté que l'extrusion constitue un moyen, parmi d'autres, de mélange à l'état fondu des constituants M et polymère hyperbranché fonctionnalisé.

Le radical $R^2$ de fonctionnalisation du polymère hyperbranché est, de préférence, non réactif avec la matrice et, de manière tout à fait surprenante et inattendue, induit une fluidification de la composition à l'état fondu tout à fait significative. En effet, les gains obtenus à cet égard sont particulièrement importants puisqu'ils peuvent être par exemple d'au moins 10 à 50 %, sans que cela n'altère les propriétés mécaniques, et en particulier la résistance aux chocs du thermoplastique.

Le compromis fluidité/résistance aux chocs atteint est tout à fait intéressant.

L'additif polymère hyperbranché fonctionnalisé mis en oeuvre conformément à l'invention est facile à mettre en oeuvre et économique.

Selon une disposition préférée de l'invention, l'additif polyamide hyperbranché fonctionnalisé de la composition est caractérisé en ce que :

les entités hydrocarbonées R, R' des monomères (I) et (II) respectivement, comprennent chacune :

i. au moins un radical aliphatique linéaire ou ramifié ;
ii. et/ou au moins un radical cycloaliphatique ;
iii. et/ou au moins un radical aromatique comportant un ou plusieurs noyaux aromatiques ;
iv. et/ou au moins un radical arylaliphatique ;
ces radicaux (i), (ii), (iii), (iv) pouvant éventuellement être substitués et/ou comporter des hétéroatomes ;

A, A' est une fonction réactive du type amine, sel d'amine ou du type acide, ester, halogénure d'acide ou amide ;
B, B' est une fonction réactive du type acide, ester, halogénure d'acide ou amide ou du type amine, sel d'amine.

Ainsi, les fonctions réactives de polymérisation A, B, A', B' plus spécialement retenues sont celles appartenant au groupe comprenant les fonctions carboxyliques et amines.

Par fonction carboxylique, on entend au sens de l'invention, toute fonction acide COOH ou dérivé, notamment du type ester ou anhydride, halogénure (chlorure) d'acide.

Avantageusement, le polyamide hyperbranché modificateur du comportement rhéologique dans la composition peut être constitué d'un mélange de plusieurs monomères (I) différents, de plusieurs monomères (II) différents, et/ou de plusieurs monomères (IV) de fonctionnalisation différents.

Les monomères bifonctionnels (II) sont des éléments d'espacement dans la structure tridimensionnelle.

Selon une modalité avantageuse de l'invention, les monomères espaceurs (II), les monomères (IV) limiteurs de chaîne, et/ou les monomères (III) de type "coeur" peuvent être sous forme d'oligomères.

De préférence, f = 2 de sorte que le monomère (I) est trifonctionnel : $A-R-B_2$, A = fonction amine, B = fonction carboxylique et R = radical aromatique.

Par ailleurs, il est préférable que l'additif polyamide hyperbranché fonctionnalisé se caractérise par un rapport molaire III/I+II+IV se définissant comme suit :

$$III\,/\,I{+}II{+}N \leq 1/150$$
et de préférence $\quad III\,/\,I + II + IV \leq 1/100$
et plus préférentiellement encore $\quad III\,/\,I + II + IV \leq 1/50$

Selon une particularité de l'invention, l'additif polyamide hyperbranché fonctionnalisé utilisé est, par exemple :

- soit "petit" (de faible masse), c'est-à-dire caractérisé par un ratio:

$$1/10 \leq III / I + II + IV \leq 1/40,$$

- soit "gros" (de forte masse), c'est à dire caractérisé par un ratio :

$$1/50 \leq III / I + II + IV \leq 1/90.$$

Suivant une variante avantageuse, le radical $R^2$ de fonctionnalisation du polymère hyperbranché est choisi parmi les alkyles linéaires comprenant de 8 à 30 atomes de carbone, de préférence de 10 à 20 atomes de carbone, ou les aryles polycondensés ou non, les arylalkyles ou les alkylaryles.

En pratique, et sans que cela ne soit limitatif pour le polyamide hyperbranché fonctionnalisé :

- le monomère (I) est choisi dans le groupe comprenant :

  - l'acide 5-amino-isophtalique,
  - l'acide 6-amino-undécandioïque,
  - le diacide 3-aminopimélique,
  - l'acide aspartique,
  - l'acide 3,5-diaminobenzoïque,
  - l'acide 3,4-diaminobenzoïque,
  - et leurs mélanges ;

- le monomère bifonctionnel de formule (II) est choisi dans le groupe comprenant :

  - l'ε-caprolactame et/ou l'aminoacide correspondant : l'acide aminocaproïque,
  - l'acide para ou métaaminobenzoïque,
  - l'acide amino-11-undécanoïque,
  - le lauryllactame et/ou l'aminoacide correspondant,
  - l'acide amino-12-dodécanoïque
  - et leurs mélanges ;

- le monomère "coeur" (III) est choisi dans le groupe comprenant :

  - l'acide 1,3,5-benzène tricarboxylique,
  - la 2,2,6,6-tétra-(β-carboxyéthyl)cyclohexanone,
  - la 2,4,6-tri-(acide aminocaproïque)-1,3,5-triazine,
  - la 4-aminoéthyl-1,8-octanediamine,
  - et leurs mélanges ;

- le monomère de fonctionnalisation "limiteur de chaîne" (IV) est choisi dans le groupe comprenant :

  - la n-hexadécylamine,
  - la n-octadécylamine,
  - la n-dodécylamine,
  - la benzylamine,
  - et leurs mélanges.

Pour plus de détails sur ce polyamide hyperbranché, on se référera à la demande de brevet français N°2 793 252, aussi bien pour ce qui concerne les aspects structurels que les méthodes d'obtention de ce polyamide hyperbranché fonctionnalisé.

S'agissant des monomères (I), (II) et éventuellement (III), on mentionnera respectivement l'acide 5-aminoisophtalique (AIPA, molécule de branchement de type A-R'-B$_2$, avec A = NH$_2$), le caprolactame (noté CL, espaceur de type A-R"-B) et l'acide 1,3,5-benzène tricarboxylique (BTC, molécule coeur de type R-B3, avec B = COOH).

Sur le plan quantitatif, il est préférable dans le cadre de l'invention, que l'additif comportant le copolymère hyperbranché soit présent à raison de (en % en poids sec par rapport à la masse totale de la composition) :

|  |  | 0,1 à 50 |
|---|---|---|
| de préférence |  | 1 à 20 |
| et plus préférentiellement encore |  | 2 à 10. |

De plus, il s'est avéré particulièrement intéressant que le polyamide hyperbranché fonctionnalisé et utilisé comme additif modificateur du comportement rhéologique dans la composition selon l'invention, soit un polyamide hyperbranché dont la teneur en groupements terminaux acide ou amine (GT) (exprimé en méq/kg) comprise entre 0 et 100, de préférence entre 0 et 50, et plus préférentiellement encore entre 0 et 25.

Selon un mode particulier de réalisation de l'invention, les radicaux $R^2$ de fonctionnalisation du polymère hyperbranché sont du même type dans tout le polymère hyperbranché. Par exemple le polymère hyperbranché peut comporter des radicaux $R^2$ uniquement de type alkyle, et non un mélange de plusieurs type de radicaux $R^2$.

La fabrication d'un copolyamide hyperbranché fonctionnalisé du type de celui visé ci-dessus, à savoir :

○ constitué par une ou plusieurs structures arborescentes fonctionnalisée(s), par l'intermédiaire de monomères (IV) porteurs de la ou des fonctionnalités considérées,
○ et du type de ceux obtenus par réaction entre :

♦ au moins un monomère de formule (I) suivante :

$$(I) \qquad A\text{-}R\text{-}B_f$$

dans laquelle A est une fonction réactive de polymérisation d'un premier type, B est une fonction réactive de polymérisation d'un second type et capable de réagir avec A, R est une entité hydrocarbonée comportant éventuellement des hétéroatomes, et f est le nombre total de fonctions réactives B par monomère : $f \geq 2$, de préférence $2 \leq f \leq 10$ ;

♦ éventuellement au moins un monomère bifonctionnel de formule (II) suivante :

$$(II) \qquad A'\text{-}R'\text{-}B'$$

ou les lactames correspondants,
dans laquelle A', B', R' ont la même définition que celle donnée ci-dessus respectivement pour A, B, R dans la formule (I) ;

♦ éventuellement au moins un monomère "coeur" de formule (III) :

$$(III) \qquad R^1(B'')_n$$

dans laquelle :

- $R^1$ est un radical hydrocarboné substitué ou non, du genre silicone, alkyle linéaire ou ramifié, aromatique, alkylaryle, arylalkyle ou cycloaliphatique pouvant comprendre des insaturations et/ou des hétéroatomes ;
- B'' est une fonction réactive de même nature que B ou B' ;
- $n \geq 1$, de préférence $1 \leq n \leq 100$

♦ et au moins un monomère de fonctionnalisation "limiteur de chaîne" répondant à la formule (IV) :

$$(IV) \qquad R^2\text{-}A''$$

dans laquelle :

- $R^2$ est un radical hydrocarboné substitué ou non, du genre silicone, alkyle linéaire ou ramifié, aromatique, arylalkyle, alkylaryle ou cycloaliphatique pouvant comprendre une ou plusieurs insaturations et/ou un ou plusieurs hétéroatomes ;
- et A'' est une fonction réactive de même nature que A ou A' ;

est réalisée par polycondensation en phase fondue entre des monomères (I), éventuellement des monomères (II), qui réagissent également entre eux et avec des monomères (IV) de fonctionnalisation, et éventuellement avec des monomères (III).

La polymérisation par copolycondensation s'effectue par exemple, dans des conditions et selon un mode opératoire équivalent à ceux utilisés pour la fabrication de polyamides linéaires, par exemple à partir de monomères (II).

Concernant le constituant essentiel sur le plan quantitatif de la composition selon l'invention, à savoir la matrice thermoplastique, le ou les (co)polymère(s) thermoplastique(s) constituant la matrice est (sont) choisis dans le groupe comprenant : les polyoléfines, les polyesters, les polyoxydes d'alkylène, les polyoxyalkylènes, les polyhalogénoalkylènes, les poly(alkylène-phtalate ou téréphtalate), les poly(phény ou phénylène), poly(oxyde ou sulfure de phénylène), les acétates de polyvinyle, les alcools polyvinyliques, les halogénures de polyvinyle, les halogénures de polyvinylidène, les polyvinyles nitriles, les polyamides, les polyimides, les polycarbonates, les polysiloxanes, les polymères d'acide acrylique ou méthacrylique, les polyacrylates ou méthacrylates, les polymères naturels que sont la cellulose et ses dérivés, les polymères synthétiques tels que les élastomères synthétiques, ou les copolymères thermoplastiques comprenant au moins un monomère identique à l'un quelconque des monomères inclus dans les polymères susmentionnés, ainsi que les mélanges et/ou les alliages de tous ces (co)polymères.

Pour préciser les choses, on peut indiquer que la matrice peut être constituée d'au moins l'un des polymères ou copolymères suivants :

Le polyacrylamide, le polyacrylonitrile, le poly(acide acrylique), les copolymères éthylène-acide acrylique, les copolymères éthylène-alcool vinylique, les copolymères méthacrylate de méthyle -styrène, les copolymères éthylène-acrylate d'éthyle, les copolymères (méth)acrylate-butadiène-styrène (ABS), et les polymères de la même famille; les polyoléfines comme le poly(éthylène) basse densité, le poly(propylène), le poly(éthylène) chloré basse densité, le poly(4-méthyl-1-pentène), le poly(éthylène), le poly(styrène), et les polymères de la même famille ; les ionomères : les poly (épichlorohydrine) ; les poly(uréthane) tels que produits de polymérisation de diols comme la glycérine, le triméthylol-propane, le 1,2,6-hexanetriol, le sorbitol, le pentaérythritol, les polyéther polyols, les polyester polyols et composés de la même famille avec des polyisocyanates comme le 2,4-tolylène diisocyanate, le 2,6-tolylène diisocyanate, le 4,4'-diphénylméthane diisocyanate, le 1,6-hexaméthylène diisocyanate, le 4,4'-dicycohexylméthane diisocyanate et les composés de la même famille ; et les polysulfones telles que les produits de réaction entre un sel de sodium du 2,2-bis (4-hydroxyphényl) propane et de la 4,4'dichlorodiphéryl sulfone ; les résines furane comme le poly(furane) ; les plastiques cellulose-ester comme l'acétate de cellulose, l'acétate-butyrate de cellulose, propionate de cellulose et les polymères de la même famille ; les silicones comme le poly(diméthyl siloxane), le poly(diméthyl siloxane co-phénylméthyl siloxane), et les polymères de la même famille ; les mélanges d'au moins deux des polymères précédents.

Avantageusement, la matrice M polymère thermoplastique est en polyester, tel que le polyéthylène téréphtalate (PET), le polypropylène téréphtalate (PPT), le polybutylène téréphtalate (PBT), leurs copolymères et mélanges.

De manière plus préférée encore, le ou les polymère(s) thermoplastique(s) est sélectionné dans le groupe de (co)polyamides comprenant : le Nylon 6, le Nylon 6.6, le Nylon 4, le Nylon 11, le Nylon 12, les polyamides 4-6, 6-10, 6-12, 6-36, 12-12, leurs copolymères et mélanges.

Comme autres polymères préférés de l'invention, on peut citer les polyamides semicristallins ou amorphes, tels que les polyamides aliphatiques, polyamides semi-aromatiques et plus généralement, les polyamides linéaires obtenus par polycondensation entre un diacide saturé aliphatique ou aromatique, et une diamine primaire saturée aromatique ou aliphatique, les polyamides obtenus par condensation d'un lactame, d'un aminoacide ou les polyamides linéaires obtenus par condensation d'un mélange de ces différents monomères.

Plus précisément, ces copolyamides peuvent être, par exemple, le polyadipamide d'hexaméthylène, les polyphtalamides obtenus à partir d'acide téréphtalique et/ou isophtalique tels que le polyamide commercialisé sous le nom commercial AMODEL, les copolyamides obtenus à partir d'acide adipique, d'hexaméthylène diamine et de caprolactame.

Conformément à un mode préféré de réalisation de l'invention, le ou les (co)polymère(s) thermoplastique(s) est (sont) un polyamide 6.6.

Selon un mode particulier de réalisation de l'invention, le ou (les) polymère(s) thermoplastique(s) est un polyamide 6, dont la viscosité relative, mesurée à 25°C à une concentration de 0,01 g/ml dans une solution d'acide sulfurique à 96%, est supérieure à 3,5, de préférence supérieure à 3,8.

Selon une autre caractéristique avantageuse de l'invention, la matrice (M) polymère de la composition est constituée par un mélange et/ou alliage d'un polyamide avec un ou plusieurs autres polymères, de préférence polyamides ou copolyamides.

Un mélange et/ou alliage de (co)polyamide avec au moins un polymère du type polyoxyde de propylène (PPO), polychlorure de vinyle (PVC), polyacrylo-butadiène-styrène (ABS), est également envisageable.

Pour améliorer les propriétés mécaniques de la composition selon l'invention, il peut être avantageux de lui adjoindre au moins une charge de renfort et/ou de remplissage choisie dans le groupe comprenant les charges fibreuses telles que les fibres de verre, les charges minérales telles que les argiles, le kaolin, ou des nanoparticules renforçantes ou en matière thermo-durcissable, et les charges en poudre telles que le talc.

Le taux d'incorporation en charge de renfort est conforme aux standards dans le domaine des matériaux composites. Il peut s'agir par exemple d'un taux de charge de 1 à 90 %, de préférence de 10 à 60 %, et plus spécifiquement de 50 %.

Les additifs polymère hyperbranché peuvent en outre être associés à d'autres additifs de renfort tels que des modificateurs de la résilience comme des élastomères éventuellement greffés.

Naturellement, la composition selon l'invention peut également contenir tous autres additifs ou adjuvants appropriés, par exemple des charges de remplissage ($SiO_2$), des ignifugeants, des stabilisants aux UV, à la chaleur, des matifiants ($TiO_2$), des lubrifiants, des plastifiants, des composés utiles pour la catalyse de la synthèse de la matrice polymère, des antioxydants, des antistatiques, des pigments, des colorants, des additifs d'aide au moulage ou des tensioactifs. Cette liste n'a aucun caractère limitatif.

Les compositions selon l'invention peuvent être utilisées comme matière première dans le domaine des plastiques techniques, par exemple pour la réalisation d'articles moulés par injection ou par injection/soufflage, extrudés par extrusion classique ou par extrusion soufflage, ou de films.

Les compositions selon l'invention peuvent également être mises sous forme de fils, fibres, filaments par filage en fondu.

L'additif polymère hyperbranché fonctionnalisé de l'invention est introduit dans la matrice polymère thermoplastique, de préférence polyamide. Pour ce faire, on peut avoir recours à toutes méthodes connues d'introduction de particules dans une matrice.

Une première méthode pourrait consister à mélanger le polymère hyperbranché fonctionnalisé dans de la matrice fondue, et éventuellement à soumettre le mélange à un cisaillement important, par exemple dans un dispositif d'extrusion bi-vis, afin de réaliser une bonne dispersion. Un tel dispositif est généralement disposé en amont des moyens de mise en forme de la matière plastique fondue (moulage, extrusion, filage). Selon un mode de réalisation usuel, on extrude ce mélange sous forme de joncs qui sont ensuite découpés en granulés. Les pièces moulées sont ensuite réalisées par fusion des granulés produits ci-dessus et alimentation de la composition à l'état fondu dans des dispositifs de moulage, d'injection, d'extrusion ou filage appropriés.

Dans le cas de la fabrication de fils, fibres et filaments, la composition obtenue en sortie d'extrudeuse alimente éventuellement directement une installation de filage.

Une deuxième méthode peut être celle qui consiste à mélanger le polymère hyperbranché aux monomères, dans le milieu de polymérisation de la matrice thermoplastique ou au cours de la polymérisation.

Selon une variante, on pourrait mélanger à la matrice fondue, un mélange concentré d'une résine et de polymère hyperbranché fonctionnalisé, préparé par exemple selon l'une des méthodes décrites précédemment.

Suivant un autre de ses aspects, la présente invention vise les articles obtenus par mise en forme, de préférence, par moulage, moulage par injection, injection/soufflage, extrusion, extrusion/soufflage ou filage, de l'une des compositions polymères additivées polymère hyperbranché et telles que définies ci-dessus.

Ces articles peuvent être des fils, des fibres, des films, ou des filaments.

Il peut s'agir aussi d'articles moulés à partir de la composition selon l'invention comprenant un polymère notamment du polyamide, du polymère hyperbranché tel que défini ci-dessus, et éventuellement des fibres de renfort (verre).

L'invention a également pour objet l'utilisation à titre d'agent modificateur du comportement rhéologique d'une matrice polymère thermoplastique, du polymère hyperbranché fonctionnalisé tel que défini supra.

D'autres détails et avantages de l'invention apparaîtront plus clairement au vu des exemples donnés ci-après, uniquement à titre d'illustration.

## EXEMPLES

Exemples 1 à 6 : Synthèse de polyamide hyperbranché (PAHB) à base de BTC/AIPA/CL/Alkyle $C_{16}$ ou $C_{18}$ (exemple 5 et 6)

Exemple 7 : Caractérisation des PAHB des exemples 1 à 4 et 6.

Exemple 8 : Préparation de compositions selon l'invention à base de polyamide PA 6.6, de fibres de verre, et de PAHB alkylés selon les exemples 1 à 3, à divers taux d'incorporation.

Exemple 9 : Préparation de composition selon l'invention sans fibres de verre à base de PA 6.6, de PAHB des exemples 1 et 2 selon deux taux d'incorporation.

Exemple 10 : Préparation de compositions selon l'invention à base de PA6 et de PAHB de l'exemple 6

Exemple 11 : Préparation de compositions selon l'invention à base de PA6 haute masse et de PAHB de l'exemple 6

Exemple 12 : : Préparation de compositions selon l'invention à base de Polypropylène et de PAHB de l'exemple 6

Exemple 13 : Préparation de compositions selon l'invention à base de PA 6.6 et d'hyperbranchés Boltorn® (Perstorp) fonctionnalisés

Exemple 14 : Evaluation des caractéristiques rhéologiques et mécaniques des compositions des exemples 8 et 9.

Exemple 15 : Evaluation de la fluidité des compositions des exemples 10 et 11

Exemple 16 : Evaluation de la fluidité des compositions de l'exemple 12

Exemple 17 : Evaluation de la fluidité des compositions de l'exemple 13

Exemple 18 : Mesure des valeurs des diminutions de pression de pack (tête de filière) lors du filage des compositions M/PAHB fonctionnalisé des exemples 2 et 4

Exemple 19 : Mesure des diminutions de pression pack (tête de filière) lors du filage de compositions à base de PA 6 haute masse et de PAHB de l'exemple 6

**Description des Figures :**

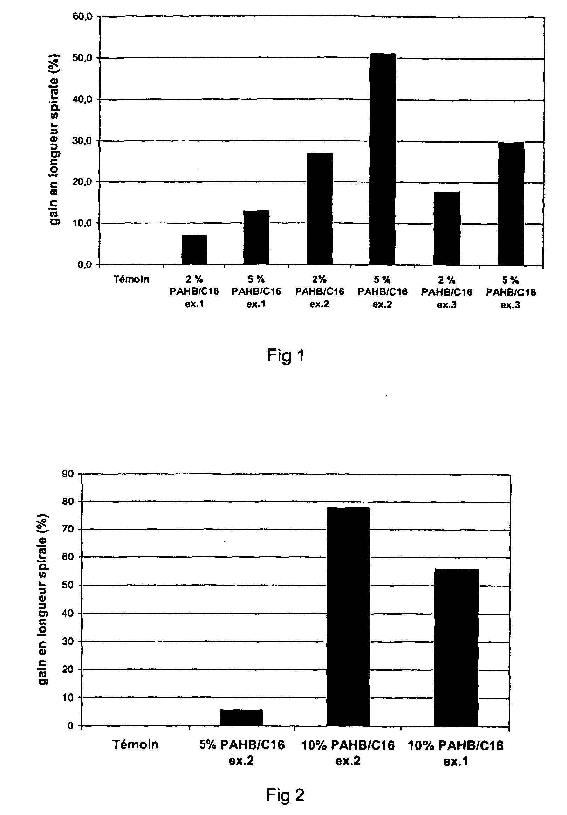

La Figure 1 annexée est un histogramme de la variation du gain en longueur spirale pour les compositions PA6.6 + 50 % fibres de verre + PAHB/$C_{16}$ du Tableau II.

La Figure 2 donne un histogramme de gains en longueur spirale pour les compositions PA6.6 + PAHB/$C_{16}$ du Tableau III.

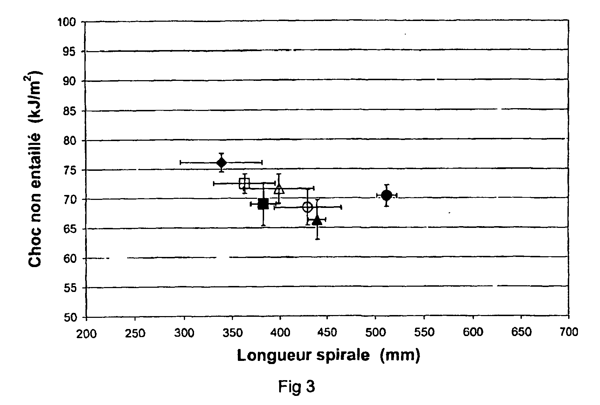

La Figure 3 rend compte du compromis fluidité/résistance aux chocs en donnant la résistance aux chocs en fonction de la longueur spirale pour les compositions du Tableau II. La légende de la figure 3 est la suivante :

   ♦ : témoin PA6.6 + 50%FV ;
   □ : PA6.6 + 50%FV + 2% PAHB/$C_{16}$ ex.1 ;
   ■ : PA6.6 + 50%FV + 5% PAHB/$C_{16}$ ex.1 ;
   ○ : PA6.6 + 50%FV + 2% PAHB/$C_{16}$ ex.2 ;
   ● : PA6.6 + 50%FV + 5% PAHB/$C_{16}$ ex.2 ;
   Δ : PA6.6 + 50%FV + 2% PAHB/$C_{16}$ ex.3 ;
   ▲ : PA6.6 + 50%FV + 5% PAHB/$C_{16}$ ex.3

**Exemple 1: synthèse d'un copolyamide hyperbranché à terminaisons hexadécylamide par copolycondensation en phase fondue de l'acide 1,3,5-benzène tricarboxylique (noté BTC, molécule coeur de type $R^1$-$B_3$, avec B = COOH), de l'acide 5-aminoisophtalique (noté AIPA, molécule de branchement de type A-R-$B_2$, avec A = $NH_2$), de l'ε-caprolactame (noté CL, espaceur de type A-R'-B) et de la n-hexadécylamine (noté $C_{16}$, bloqueur alkyle de type $R^2$-A). La composition globale respective est de 1/25/25/28 en BTC/AIPA/CL/$C_{16}$, (III / I + II + IV =1/78)**

La réaction est effectuée à pression atmosphérique dans un autoclave de 7,5 1 utilisé couramment pour la synthèse en phase fondue de polyesters ou de polyamides.

Les monomères sont chargés intégralement en début d'essai dans le réacteur préchauffé à 70°C et sous agitation à 80t/min. On introduit successivement dans le réacteur 1685,0 g d'hexadécylamine fondue à 90% de pureté (6,28 mol), 634,6 g d'ε-caprolactame (5,61 mol), 1015,8 g d'acide 5-aminoisophtalique (5,61 mol), 47,1 g d'acide 1,3,5-benzène tricarboxylique (0,22 mol) et 6,0 g d'une solution aqueuse à 50% (p/p) d'acide hypophosphoreux. Le réacteur est purgé par une succession de 4 séquences de mise sous vide et de rétablissement de la pression atmosphérique à l'aide d'azote sec.

La masse réactionnelle est chauffée progressivement de 70 à 260°C sous agitation, en environ 200 min.

Après 30 minutes sous agitation à 260°C, le réacteur est mis sous vide progressif sur 60 min. Le vide minimal est alors maintenu pendant 30 min supplémentaires. 229,5 g de distillat sont récupérés.

En fin de cycle, l'agitation est arrêtée et le réacteur est placé sous surpression d'azote. Ensuite, on ouvre progressivement la vanne de fond et le polymère est coulé à 260°C dans un seau en inox. Le produit est alors refroidi dans la carboglace sous un courant d'azote. 2900g de polymère sont recueillis.

Le copolyamide hyperbranché obtenu est vitreux et peut facilement être concassé en paillettes ou broyé.

**Exemple 2: synthèse d'un copolyamide hyperbranché à terminaisons hexadécylamide par copolycondensation en phase fondue de l'acide 1,3,5-benzène tricarboxylique (noté BTC, molécule coeur de type $R^1$-$B_3$, avec B = COOH), de l'acide 5-aminoisophtalique (noté AIPA, molécule de branchement de type A-R-$B_2$, avec A = $NH_2$), de l'ε-caprolactame (noté CL, espaceur de type A-R'-B) et de la n-hexadécylamine (noté $C_{16}$, bloqueur alkyle de type $R^2$-A). La composition globale respective est de 1/6/6/9 en BTC/AIPA/CL/$C_{16}$, (III / I+ II + IV = 1/21)**

Le montage et le mode opératoire mis en oeuvre sont strictement identiques à ceux décrit dans l'exemple 1.

Sont chargés successivement dans le réacteur préchauffé à 70°C : 1867,4 g d'hexadécylamine fondue à 90% de pureté (6,96 mol), 525,1 g d'ε-caprolactame (4,64 mol), 840,6 g d'acide 5-aminoisophtalique (4,64 mol), 162,5 g d'acide 1,3,5-benzène tricarboxylique (0,77 mol) et 6,1 g d'une solution aqueuse à 50% (p/p) d'acide hypophosphoreux.

La masse réactionnelle est chauffée progressivement de 70 à 260°C sous agitation, en environ 200 min.

Après 30 minutes sous agitation à 260°C, le réacteur est mis sous vide pour parfaire la polycondensation. 155,2g de distillat sont recueillis.

En fin de cycle, le polymère est expulsé par la vanne de fond à 260°C dans un bécher inox, puis refroidi dans la carboglace sous un courant d'azote. 2946g de polymère sont recueillis.

Le copolyamide hyperbranché obtenu est vitreux.

**Exemple 3: synthèse d'un copolyamide hyperbranché à terminaisons hexadécylamide par copolycondensation en phase fondue de l'acide 1,3,5-benzène tricarboxylique (noté BTC, molécule coeur de type $R^1$-$B_3$, avec B = COOH), de l'acide 5-aminoisophtalique (noté AIPA, molécule de branchement de type A-R-$B_2$, avec A = $NH_2$), de l'$\varepsilon$-caprolactame (noté CL, espaceur de type A-R'-B) et de la n-hexadécylamine (noté $C_{16}$, bloqueur alkyle de type $R^2$-A). La composition globale respective est de 1/20/40/23 en BTC/AIPA/CL/$C_{16}$, (III / I + II + IV =1/83)**

Le montage et le mode opératoire mis en oeuvre sont strictement identiques à ceux décrit dans l'exemple 1.

Sont chargés successivement dans le réacteur préchauffé à 70°C : 1408,9 g d'hexadécylamine fondue à 90% de pureté (5,25 mol), 1033,5 g d'$\varepsilon$-caprolactame (9,13 mol), 827,2 g d'acide 5-aminoisophtalique (4,57 mol), 48,0 g d'acide 1,3,5-benzène tricarboxylique (0,23 mol) et 6,5 g d'une solution aqueuse à 50% (p/p) d'acide hypophosphoreux.

Le réacteur est agité et chauffé comme dans l'exemple 1. 193,4 g de distillat sont recueillis.

En fin de cycle, le polymère est coulé dans un bécher inox, puis refroidi dans la carboglace sous un courant d'azote. 2837,5 g de polymère sont recueillis.

Le copolyamide hyperbranché obtenu est vitreux.

**Exemple 4: synthèse d'un copolyamide hyperbranché à terminaisons hexadécylamide par copolycondensation en phase fondue de l'acide 1,3,5-benzène tricarboxylique (noté BTC, molécule coeur de type $R^1$-$B_3$, avec B = COOH), de l'acide 5-aminoisophtalique (noté AIPA, molécule de branchement de type A-R-$B_2$, avec A = $NH_2$), de l'$\varepsilon$-caprolactame (noté CL, espaceur de type A-R'-B) et de la n-hexadécylamine (noté $C_{16}$, bloqueur alkyle de type $R^2$-A). La composition globale respective est de 1/5/10/8 en BTC/AIPA/CL/$C_{16}$, (III / I + II + IV = 1/23)**

La réaction est effectuée à pression atmosphérique dans un autoclave de 1,0 l utilisé couramment en laboratoire pour la synthèse en phase fondue de polyesters ou de polyamides.

Les monomères sont chargés intégralement en début d'essai dans le réacteur à 20°C. On introduit successivement dans le réacteur 190,4 g d'hexadécylamine solide à 90% de pureté (0,71 mol), 100,4 g d'$\varepsilon$-caprolactame (0,89 mol), 80,4 g d'acide 5-aminoisophtalique (0,44 mol), 18,6 g d'acide 1,3,5-benzène tricarboxylique (0,09 mol) et 0,76 g d'une solution aqueuse à 50% (p/p) d'acide hypophosphoreux.

La masse réactionnelle est chauffée progressivement de 20 à 260°C sous agitation, en environ 200 min.

Après 63 minutes sous agitation à 260°C, le réacteur est mis sous vide progressif sur 61 min. Le vide minimal atteint est de 1 à 2 mBar et est alors maintenu pendant 30 min supplémentaires. 8 ml environ de distillat sont recueillis.

En fin de cycle, l'agitation est arrêtée et le réacteur est placé sous surpression d'azote. La vanne de fond est progressivement ouverte et le polymère est coulé dans un bécher en inox. Le produit est alors refroidi dans la carboglace sous un courant d'azote. 339 g de polymère sont recueillis, incluant les prélèvements en cours de synthèse.

Le copolyamide hyperbranché obtenu est vitreux.

**Exemple 5 : synthèse d'un copolyamide hyperbranché à terminaisons Octadécylamide par copolycondensation en phase fondue de l'acide 1,3,5-benzène tricarboxylique (noté BTC, molécule coeur de type $R^1$-$B_3$, avec B = COOH), de l'acide 5-aminoisophtalique (noté AIPA, molécule de branchement de type A-R-$B_2$, avec A = $NH_2$), de l'ε-caprolactame (noté CL, espaceur de type A-R'-B) et de la n-Octadécylamine (noté $C_{18}$, bloqueur alkyle de type $R^2$-A). La composition globale respective est de 1/6/6/9 en BTC/AIPA/CL/$C_{18}$, (III / I + II + IV = 1/21)**

La réaction est effectuée à pression atmosphérique dans un autoclave en verre de 0,5 1 utilisé couramment en laboratoire pour la synthèse en phase fondue de polyesters ou de polyamides.

Sont chargés successivement dans le réacteur à 90°C : 122,0 g d'Octadécylamine en pastilles à 90% de pureté (0,41 mol), 30,9 g d'ε-caprolactame (0,27 mol), 49,4 g d'acide 5-aminoisophtalique (0,27 mol), 9,6 g d'acide 1,3,5-benzène tricarboxylique (0,05 mol) et 0,25 g d'une solution aqueuse à 50% (p/p) d'acide hypophosphoreux.

La masse réactionnelle est chauffée progressivement de 90 à 260°C sous agitation, en environ 200 min.

La température est maintenue à 260°C sous agitation pendant 60 minutes. Le réacteur est alors mis sous vide progressif sur 38 min. Le vide minimal atteint est de 5 mBar et est ensuite maintenu pendant 65 min supplémentaires. 12.5 g de distillat sont recueillis.

En fin de cycle, le polymère est refroidi dans le réacteur sous un courant d'azote. 157,9 g de polymère sont recueillis (sans tenir compte des prélèvements en cours). Le copolyamide hyperbranché est vitreux et peut facilement être concassé en paillettes ou broyé.

**Exemple 6 : Synthèse d'un copolyamide hyperbranché à terminaisons hexadécylamide par copolycondensation en phase fondue de l'acide 1,3,5-benzène tricarboxylique (noté BTC, molécule coeur de type $R^1$-$B_3$, avec B = COOH), de l'acide 5-aminoisophtalique (noté AIPA, molécule de branchement de type A-R-$B_2$, avec A = $NH_2$), de l'ε-caprolactame (noté CL, espaceur de type A-R'-B) et de la n-octadécylamine (noté $C_{18}$, bloqueur alkyle de type $R^2$-A). La composition globale respective est de 1/6/6/9 en BTC/AIPA/CL/$C_{18}$, (III / I + II + IV = 1/21)**

La réaction est effectuée à pression atmosphérique dans un autoclave de 200 1 utilisé couramment pour la synthèse en phase fondue de polyesters ou de polyamides.

Les monomères sont chargés intégralement en début d'essai dans le réacteur préchauffé à 70°C et sous agitation à 80t/min. On introduit successivement dans le réacteur 47 kg d'octadécylamine fondue (0,17 mol), 14,0 kg d'ε-caprolactame (0,12 mol), 22,4 kg d'acide 5-aminoisophtalique (0,12 mol), 4,3 kg d'acide 1,3,5-benzène tricarboxylique (0,02 mol) et 163 g d'une solution aqueuse à 50% (p/p) d'acide hypophosphoreux. Le réacteur est purgé par une succession de 4 séquences de mise sous vide et de rétablissement de la pression atmosphérique à l'aide d'azote sec.

La masse réactionnelle est chauffée progressivement de 20 à 260°C sous agitation, en environ 200 min.

La masse réactionnelle est chauffée progressivement de 70 à 260°C sous agitation, en environ 200 min.

Après 30 minutes sous agitation à 260°C, le réacteur est mis sous vide progressif sur 60 min. Le vide minimal est alors maintenu pendant 30 min supplémentaires. Environ 6 kg de distillat sont récupérés.

En fin de cycle, une pastilleuse Sandvik est connectée en sortie de réacteur et le polymère est coulé au moyen d'une pompe à engrenages dans le rotoforme. Les pastilles ainsi formées sont ensuite refroidies sur une bande métallique, refroidie par eau par le dessous. Le polymère est directement ensaché en fin de bande. Environ 70 kg de polymère sont recueillis par synthèse.

Le copolyamide hyperbranché obtenu est vitreux.

**Exemple 7 : Caractérisation de polyamides hyperbranchés à terminaisons alkyle avec différents rapports A-R-$B_2$ / A-R'-B et différentes masses molaires**

Différents polymères hyperbranchés sont synthétisés selon les protocoles décrits dans les exemples 1 à 4 et 6. Dans tous les cas, le monomère A-R'-B est l'ε-caprolactame et celui A-R-$B_2$, l'acide 5-amino isophtalique.

Les teneurs en groupements terminaux acide et amine sont dosées par potentiométrie. Les masses molaires sont déterminées par chromatographie par perméation de gel (GPC) dans la DiMéthyl Acétamide, par rapport à des étalons de polystyrène, puis par détection par réfractométrie RI.

Les résultats sont rassemblés dans le tableau I ci-après.

**TABLEAU 1**

| N° | Composition | Ratio | Mn théorique | GTA | GTC | Mn | Mw | Mz | IP |
|---|---|---|---|---|---|---|---|---|---|
| | BTC / AIPA / CL/C$_{16}$ou C$_{18}$ | ARB2 / AR'B | (g/mol) | (méq/Kg) | (méq/Kg) | (g/mol) | (g/mol) | (g/mol) | |
| 1 | 1 / 25 / 25 / 28 (C$_{16}$) | 1/1 | 13375 | 2,4± 0,6 | 20,4 ±1,6 | 6020 | 11240 | 17830 | 1,87 |
| 2 | 1/6/6/9 (C$_{16}$) | 1/1 | 3879 | 3,1 ± 0,3 | 7,7± 1.8 | 4890 | 7750 | 11440 | 1,58 |
| 3 | 1/20/40/23 (C$_{16}$) | 1/2 | 13139 | 3,7 ±0,4 | 35,7 ± 1,2 | 6780 | 13250 | 21600 | 1,95 |
| 4 | 1/5/10/8 (C$_{16}$) | 1/2 | 3945 | 14,0± 0,5 | 15,5 ± 0,7 | 4860 | 7630 | 11280 | 1,57 |
| 6 | 1/6/6/9 (C$_{18}$) | 1/1 | 4005 | 3.9 | 12.9 | 6600 | 11710 | - | 1.8 |

*Abréviations :*

- BTC :              Acide benzène tricarboxylique ou trimésique
- AIPA :             Acide 5-Amino isophtalique
- CL :               ε-caprolactame
- C$_{16}$ :             n-Hexadécylamine
- C$_{18}$:              n-Octadécylamine
- GTA :              Teneur en groupements terminaux amine
- GTC :              Teneur en groupements terminaux acide
- Mn, Mw, Mz :    masses molaires moyennes en équivalent polystyrène
- IP :               indice de polymolécularité

Les analyses DSC de ces polyamides hyperbranchés montrent uniquement un pic de fusion large vers -4°C. Ce pic correspond aux segments alkyle et souligne la micro ségrégation de phase des motifs hydrophobes par rapport à ceux polyamide.

**Exemple 8 : préparation de mélanges de matrice polyamide PA 6.6 / fibres de verre / additif modificateur du comportement rhéologique PAHB alkylé C$_{16}$**

Les PAHB des exemples 1, 2 et 3 sont grossièrement broyés et pré-mélangés dans les proportions désirées à des granulés de PA 6.6.

Le PA 6.6 se définit comme suit : indice de viscosité mesuré à 25°C dans l'acide formique à 90% (ISO 307) de 137, teneur en groupements terminaux amine de 53 meq/kg et teneur en groupements terminaux acide de 72 meq/kg.

Des compositions contenant 50 % en poids de fibres de verre (Owens Corning OCF180K) et une matrice PA 6.6 additivée par des quantités variables des PAHB des exemples 1, 2 et 3 sont réalisées par mélange à l'état fondu à une température de 280°C en extrudeuse bi-vis.

On prépare également un témoin constitué par une composition thermoplastique à base de PA 6.6 et de 50 % en poids de fibres de verre.

Les propriétés rhéologiques et mécaniques de ces compositions sont évaluées dans l'exemple 14.

**Exemple 9 : préparation de mélanges de matrice PA 6.6 + PAHB alkylé C$_{16}$**

Le PA 6.6 utilisé est le même qu'à l'exemple 8 et les PAHB alkylés C16 sont ceux des exemples 2 et 1, à des taux de 5 et 10 % (seulement 10% pour l'exemple 1) en poids par rapport au total du mélange.

Les évaluations rhéologiques et mécaniques sont données dans l'exemple 14 ci-après.

**Exemple 10 : Préparation de composition selon l'invention à base de PA 6 et de PAHB de l'exemple 6**

Le PAHB de l'exemple 6 est d'abord pré-mélangé dans les proportions désirées à des granulés de PA 6.

Le PA 6 considéré a une viscosité relative, mesurée à 25°C à une concentration de 0,01 g/ml dans une solution d'acide sulfurique à 96%, de 2,7. Sa teneur en groupements terminaux amine est de 35 meq/kg et sa teneur en groupements terminaux acide de 57 meq/kg.

Les compositions de PA 6 additivé par des quantités variables de PAHB de l'exemple 6 sont réalisées par mélange à l'état fondu à une température de 250°C en extrudeuse bi-vis. On prépare également un témoin PA6 sans PAHB.

Les propriétés rhéologiques de ces compositions sont évaluées dans l'exemple 15.

**Exemple 11 : Préparation de composition selon l'invention à base de PA 6 haute masse et de PAHB de l'exemple 6**

Le PAHB de l'exemple 6 est d'abord pré-mélangé dans les proportions désirées à des granulés de PA 6 haute masse.

Le PA 6 haute masse se définit par sa viscosité relative, mesurée à 25°C à une concentration de 0,01 g/ml dans une solution d'acide sulfurique à 96%, qui est supérieure à 3,5, de préférence supérieure à 3,8. Sa teneur en groupements terminaux amine est de 33 meq/kg et sa teneur en groupements terminaux acide de 31 meq/kg.

Les compositions de PA 6 haute masse additivé par des quantités variables de PAHB de l'exemple 6 sont réalisées par mélange à l'état fondu à une température de 300°C en extrudeuse bi-vis. On prépare également un témoin PA6 haute masse sans PAHB.

Les propriétés rhéologiques de ces compositions sont évaluées dans l'exemple 15.

**Exemple 12 : Préparation de composition selon l'invention à base de PolyPropylène et de PAHB de l'exemple 6**

Le PAHB de l'exemple 6 est d'abord pré-mélangé dans les proportions désirées à des granulés de PP. Le PP utilisé est un grade Appryl® d'Atofina, de Melt Flow Index, mesuré à 230°C sous 2,16 kg, de 3 g/10 min (ISO 1133).

Les compositions de PP additivé par des quantités variables de PAHB de l'exemple 6 sont réalisées par mélange à l'état fondu à une température de 180°C en extrudeuse bi-vis. On prépare également un témoin PP sans PAHB.

Les propriétés rhéologiques de ces compositions sont évaluées dans l'exemple 16

**Exemple 13 : Préparation de compositions à base de PA 6.6 et d'hyperbranchés Boltorn® (Perstorp) fonctionnalisés**

L'incorporation des hyperbranchés (à 5% en poids par rapport au poids total de la composition) dans le PA 6.6 se fait par mélange de poudres grossières, puis en phase fondue à l'aide d'un micro-extrudeur, à une température de 285°C.

Le PA 6.6 considéré a un indice de viscosité, mesuré à 25°C dans l'acide formique à 90% (ISO 307) de 135 ml/g.

Les hyperbranchés Boltorn® (base polyester) considérés sont les suivants :

- Boltorn® H30 fonctionnalisé à 95% acide benzoïque
- Boltorn® H40 fonctionnalisé à 95% acide dodécanoïque.

Les propriétés rhéologiques de ces compositions sont évaluées dans l'exemple 17

**Exemple 14 : évaluation rhéologique et mécanique des compositions des exemples 8 et 9**

Les tests mis en oeuvre sont :

- <u>Test spirale TS (fluidité à l'état fondu) de quantification de la fluidité des compositions selon l'invention et des compositions témoins :</u>
  Les granulés de composition M/polymère hyperbranché ou de composition témoin M sont fondus puis injectés dans un moule en forme de spirale à section semi-circulaire d'épaisseur 2 mm et de diamètre 4 mm, dans une presse DEMAG H200-80 à une température de fourreau de 300°C, une température de moule de 80°C et avec une pression d'injection de 1500 bars. La durée d'injection est de 0,5 seconde. Le résultat est exprimé en longueur de moule remplie correctement par la composition. Les compositions évaluées dans ce test ont toutes un taux d'humidité avant moulage équivalent à 0,1% près par rapport à la matrice.

- Tests mécaniques :
  Les caractéristiques mécaniques sont évaluées par des tests de choc sans entaille (ISO 179/1eU), choc avec entaille (ISO 179/1eA), module en flexion ISO 178, contrainte rupture en flexion ISO 178 et température de fléchissement sous charge (HDT) ISO 75Ae.
  Les résultats sont donnés dans les tableaux II et III ci-après.

## TABLEAU II

### Compositions chargées 50% fibres de verre (FV)

| Composition | Longueur spirale (mm) | Taux d'humidité avant moulage (%)* | Masse du PA (g/mol)** | % de la variation de la masse par rapport à la masse du témoin | Choc sans entaille (KJ/m²) ISO 179/1Eu | Choc avec entaille (KJ/m²) ISO 179/1eA | Module en flexion (N/mm²) ISO 178 | Contrainte rupture en flexion (N/mm²) ISO 178 | HDT (°C) (1.80 N/mm²) ISO 75Ae |
|---|---|---|---|---|---|---|---|---|---|
| TEMOIN PA66/50%FV | 339 | 0,20 | 65250 | | 82,4 | 11,0 | 11800 | 280 | 248 |
| PA66/50%FV + 2% PAHB/C₁₆ ex. 1 | 363 | 0,18 | 62440 | -4,3 | 76,2 | 10,5 | 11500 | 268 | 245 |
| PA66/50%FV + 5% PAHB/C₁₆ ex. 1 | 383 | 0,18 | 69830 | + 7,0 | 71,6 | 10,4 | 12100 | 270 | 248 |
| PA66/50%FV + 2% PAHB/C₁₆ ex. 2 | 430 | 0,26 | 63550 | - 2,6 | 76,3 | 10,3 | 11500 | 262 | 245 |
| PA66/50%FV + 5% PAHB/C₁₆ ex. 2 | 512 | 0,20 | 63420 | - 2,8 | 75,9 | 10,0 | 10900 | 256 | 245 |
| PA66/50%FV + 2% PAHB/C₁₆ ex. 3 | 399 | 0,24 | 62530 | - 4,2 | 74,5 | 10,2 | 11500 | 261 | 245 |
| PA66/50%FV + 5% PAHB/C₁₆ ex. 3 | 440 | 0,18 | 64970 | - 0,4 | 67,9 | 10,1 | 11700 | 262 | 245 |

EP 1 456 302 B1

\* Taux d'humidité par rapport à la matrice mesuré par la méthode de Karl-Fischer

\*\* Maximum de la distribution des masses moléculaires de la matrice polyamide additionnée de PAHB fonctionnalisé, en équivalent Polystyrène, mesurée par Chromatographie par Perméation de Gel (GPC) en détection réfractométrique après mise en oeuvre du test spirale de quantification de la fluidité.

**TABLEAU III (exemple 9) Compositions sans fibres de verre**

| Composition | Longueur spirale (mm) |
|---|---|
| PA66 | 556 |
| PA66+5% PAHB/$C_{16}$ ex.2 | 588 |
| PA66 + 10% PAHB/$C_{16}$ ex.2 | 988 |
| PA66 + 10% PAHB/$C_{16}$ ex.1 | 866 |

**Exemple 15 : Evaluation de la fluidité des compositions des exemples 10 et 11**

Les résultats sont donnés dans le tableau IV ci-après.

**TABLEAU IV**

| Composition | Longueur spirale (mm) | Masse du PA par GPC (g/mol)\* |
|---|---|---|
| PA 6 témoin | 425 | 71560 |
| PA 6 + 5% PAHB exemple 6 | 621 | 71400 |
| PA 6 + 10% PAHB exemple 6 | 1033 | 70200 |
| PA 6 haute masse témoin | 355 | 82150 |
| PA 6 haute masse + 5% PAHB exemple 6 | 617 | 87740 |
| \* Maximum de la distribution des masses moléculaires de la matrice polyamide additionnée de PAHB fonctionnalisé, en équivalent Polystyrène, mesurée par Chromatographie par Perméation de Gel (GPC) en détection réfractométrique après mise en oeuvre du test spirale de quantification de la fluidité. | | |

**Exemple 16 : Evaluation de la fluidité des compositions de l'exemple 12**

Les résultats sont donnés dans le tableau V ci-après

**TABLEAU V**

| Composition | Longueur spirale (mm) |
|---|---|
| PP témoin | 439 |
| PP + 5% PAHB exemple 6 | 516 |
| PP + 10% PAHB exemple 6 | 715 |

**Exemple 17 : Evaluation de la fluidité des compositions de l'exemple 13**

Une mesure de la force exercée sur l'axe des vis par la matière fondue permet d'apprécier la fluidité de la composition.

Les baisses relatives de force rapportées au témoin PA 6.6 sans hyperbranché ainsi que les valeurs de masse du PA 6.6 mesurées par GPC sont regroupées dans le tableau VI suivant. Un exemple comparatif avec une composition PA 6.6 + PAHB C16 (1/25/25/28) est également mentionné dans ce tableau.

**TABLEAU VI**

| Composition | Variation de la force / témoin | Masse du PA par GPC (g/mol)* |
|---|---|---|
| PA 6.6 témoin | 0 | 74000 |
| PA 6.6 + 5% PAHB 1/25/25/28 C16 exemple 1 | -25% | 74000 |
| PA 6.6 + 5% Boltorn® H30 fonctionnalisé acide benzoïque | -47% | 69000 |
| PA 6.6 + 5% Boltorn® H40 fonctionnalisé acide dodécanoïque | -37% | 68800 |
| - Maximum de la distribution des masses moléculaires de la matrice polyamide additionnée d'hyperbranché, en équivalent Polystyrène, mesurée par Chromatographie par Perméation de Gel (GPC) en détection réfractométrique après passage au micro-extrudeur. | | |

**Exemple 18 : Mesure des valeurs des diminutions de pression de pack (tête de filière) lors du filage des compositions M/PAHB fonctionnalisé des exemples 2 et 4**

- Le polyamide 66 mis en oeuvre est un Polyamide 66 ne comprenant pas de dioxyde de titane, de viscosité relative de 2,5 (mesurée à une concentration de 10 g/l dans de l'acide sulfurique à 96%).
- L'incorporation du PAHB (2 ou 5% en poids par rapport au poids total de la composition) dans le PA66 se fait par mélange de poudres puis en phase fondue à l'aide d'un dispositif d'extrusion double vis. Il est ensuite procédé au filage du mélange fondu avec une vitesse au premier point d'appel de 800 m/min, de manière à obtenir un fil continu multifilamentaire de 90 dtex pour 10 filaments.

Les température-pression et marche de filage ainsi que les propriétés des fils obtenus sont précisées ci-après :

☐ Marche du filage : pas de casse
☐ Chauffage extrudeuse bi-vis : 285°C
☐ Vitesse de rotation des vis : 120 rpm
☐ Chauffage tête de filière : 287°C
☐ Débit sous filière : 0,41 kg/h.

Le multifilament ou fil est constitué de 10 brins (la filière est constituée de 10 trous) et le diamètre d'un brin est d'environ 30 $\mu$m.

Les valeurs des diminutions de pression de pack (tête de filières) sont mesurées à l'aide d'une pression de sonde Dynisco (0-350 bar).

Les résultats obtenus sont donnés dans le tableau VII ci-dessous.

**TABLEAU VII**

| Composition | Pression de pack (bars) | Delta pression/témoin | Masse du PA par GPC avec détection au réfractomètre * |
|---|---|---|---|
| PA 66 témoin | 35,4 | | 66 000 |
| PA 66 + 5% 1/5/10/8 exemple 4 | 25,5 | -28,0 % | 67000 |
| PA 66 + 5% 1/6/6/9 exemple 2 | 28,0 | -20,9 % | 66 000 |

Suite de tableau

| Composition | Pression de pack (bars) | Delta pression/témoin | Masse du PA par GPC avec détection au réfractomètre * |
|---|---|---|---|
| PA 66 + 2% 1/5/10/8 exemple 4 | 33,0 | -6,8 % | 66 000 |
| PA 66 + 2% 1/6/6/9 exemple 2 | 34,5 | -2,5 % | 66 000 |
| - maximum de la distribution des masses moléculaires de la matrice polyamide additionnée de PAHB fonctionnalisé, en équivalent polystyrène, mesuré par GPC en détection réfractométrique, après filage. | | | |

**Exemple 19 : Mesure des diminutions de pression pack (tête de filière) lors du filage de compositions à base de PA 6 haute masse et de PAHB de l'exemple 6**

- Le polyamide 6 haute masse mis en oeuvre est le même que celui décrit dans l'exemple 11.
- L'incorporation du PAHB (2 ou 5% en poids par rapport au poids total de la composition) dans le PA 6 haute masse se fait par mélange de poudres puis en phase fondue à l'aide d'un dispositif d'extrusion double vis. Il est ensuite procédé au filage du mélange fondu avec une vitesse au premier point d'appel de 800 m/min, de manière à obtenir un fil continu multifilamentaire de 220 dtex pour 10 filaments.

Les température, pression et marche de filage ainsi que les propriétés des fils obtenus sont précisées ci-après :

☐ Marche du filage : pas de casse
☐ Chauffage extrudeuse bi-vis : 325°C
☐ Vitesse de rotation des vis : 220 rpm
☐ Chauffage tête de filière : 296°C

Les valeurs des diminutions de pression de pack (tête de filière) sont mesurées à l'aide d'une pression de sonde Dynisco (0-350 bar).
Les résultats obtenus sont donnés dans le tableau VIII ci-dessous.

**TABLEAU VIII**

| Composition | Pression de pack (bars) | Delta pression/témoin | Masse du PA par GPC (g/mol)* |
|---|---|---|---|
| PA 6 haute masse témoin | 118 | 0 | 82360 |
| PA 6 haute masse + 2% PAHB exemple 11 | 100 | -15% | 81720 |
| PA 6 haute masse + 5% PAHB exemple 11 | 70 | -41 % | 86280 |
| - Maximum de la distribution des masses moléculaires de la matrice polyamide additionnée de PAHB fonctionnalisé, en équivalent Polystyrène, mesurée par Chromatographie par Perméation de Gel (GPC) en détection réfractométrique après filage. | | | |

**Exemple 20 : Comparaison de la masse molaire des matrices de compositions selon l'invention (PA 66/PAHB alkylé C16/fibres de verre) du type de celles de l'exemple 8 et de compositions comprenant du polyamide 66, un additif du type PAHB non fonctionnalisé et des fibres de verre.**

**20.1- Préparation du PAHB non fonctionnalisé :**

Synthèse d'un copolyamide hyperbranché à terminaisons acides carboxyliques par copolycondensation en phase fondue de l'acide 1,3,5-benzène tricarboxylique (molécule coeur de type $R^1$-$B''_3$, avec B" = COOH), de l'acide 5-aminoisophtalique (molécule de branchement de type A-R-B$_2$, avec A = NH$_2$ et B = COOH) et de l'ε-caprolactame (espaceur de type A'-R'-B' avec A' = NH$_2$ et B' = COOH).

La réaction est effectuée à pression atmosphérique dans une autoclave de 7,5l utilisée couramment pour la synthèse en phase fondue de polyesters ou de polyamides.

Les monomères sont chargés intégralement en début d'essai. On introduit successivement dans le réacteur 1811,5 g d'acide 5-aminoisophtalique (10 mol), 84 g d'acide 1,3,5-benzène tricarboxylique (0,4 mol), 1131,6 g d'ε-caprolactame (10 mol) et 1,35 g d'une solution aqueuse à 50% (p/p) d'acide hypophosphoreux. Le réacteur est purgé par une succession de 4 séquences de mise sous vide et de rétablissement de la pression atmosphérique à l'aide d'azote sec.

La masse réactionnelle est chauffée progressivement de 20 à 200°C en 100 min., puis de 200 à 245°C en 60 min. Lorsque la température masse atteint 100°C, l'agitation est enclenchée avec une vitesse de rotation de 50 tours par minute. La distillation commence à une température masse de 160°C et se poursuit jusqu'à la température de 243°C. A 245°C, l'agitation est arrêtée et le réacteur est placé sous surpression d'azote. Ensuite, on ouvre progressivement la vanne de fond et le polymère est coulé dans un seau en inox rempli d'eau.

L'eau contenue dans les 221,06 g de distillat recueillis est titrée à l'aide d'un coulomètre Karl Fischer. La teneur en eau du distillat est de 81,1 %, ce qui traduit un taux d'avancement global de 99,3%.

Le copolyamide hyperbranché obtenu est soluble à température ambiante dans la quantité de soude aqueuse nécessaire pour neutraliser les fonctions acides terminales.

**20.2 - Préparation des compositions PA 66 + PAHB non fonctionnalisé selon 20.1 + fibres de verre et d'une composition témoin exempte de PAHB non fonctionnalisé.**

On procède comme indiqué à l'exemple 8, exception faite de la température d'extrusion qui est ici de 250°C.

**20.3 - Mesure de masse molaire de la matrice des compositions selon 20.2 et des compositions obtenues à l'exemple 8, selon le protocole P**

Les compositions et les résultats sont donnés dans le tableau IX ci-dessous.

**TABLEAU IX (exemple 20) Comparaison entre PAHB non fonctionnalisé (terminé COOH) et PAHB fonctionnalisé (terminé alkyle) sur granulés de mélange avec PA (issus de l'extrusion)**

| Composition des granulés | Masse du PA (g/mol) selon le protocole P | % de variation de la masse par rapport au témoin |
|---|---|---|
| TEMOIN PA66/50%FV | 73770 | / |
| PA66/50%FV + 2% PAHB/C$_{16}$ **ex. 1** | 73690 | -0,1 |
| PA66/50%FV + 5% PAHB/C$_{16}$ **ex. 2** | 74320 | + 0,7 |
| PA66/50%FV + 2% PAHB/C$_{16}$ **ex. 2** | 75020 | + 1,7 |
| PA66/50%FV + 5% PAHB/C$_{16}$ **ex. 2** | 75650 | + 2,4 |
| PA66/50%FV + 2% PAHB/C$_{16}$ **ex. 3** | 74780 | + 1,4 |
| PA66/50%FV + 5% PAHB/C$_{16}$ **ex. 3** | 75330 | + 2,1 |
| TEMOIN PA6/50%FV selon 20.2 | 75000 | / |
| PA6/50%FV + 2% PAHB/COOH selon 20.2 | 70000 | - 6,6 |
| PA6/50%FV + 5% PAHB/COOH selon 20.2 | 60000 | - 20 |
| PA6/50%FV + 10% PAHB/COOH selon 20.2 | 57000 | - 24 |

**Revendications**

**1.** Composition polymère thermoplastique **caractérisée en ce qu'**elle comprend :

☐ une matrice M à base d'au moins un polymère thermoplastique,
☐ et au moins un additif polymère hyperbranché modificateur du comportement rhéologique comportant au moins un polymère :

➢ fonctionnalisé,
➢ hyperbranché
➢ au moins 50% des groupements terminaux de ce polymère hyperbranché sont fonctionnalisés par $R^2$,
➢ $R^2$ étant un radical hydrocarboné substitué ou non, du genre silicone, alkyle linéaire ou ramifié, aromatique, arylalkyle, alkylaryle ou cycloaliphatique pouvant comprendre une ou plusieurs insaturations et/ou un ou plusieurs hétéroatomes.

2. Composition selon la revendication 1, **caractérisée en ce que** le polymère hyperbranché est choisi parmi les polyesters, les polyesteramides, les polyamides.

3. Composition selon l'une des revendications précédentes, **caractérisée en ce que** l'additif polymère hyperbranché est un polyamide hyperbranché comportant au moins un copolyamide hyperbranché du type de ceux obtenus par réaction entre :

• au moins un monomère de formule (I) suivante :

$$- A\text{-}R\text{-}B_f$$

dans laquelle A est une fonction réactive de polymérisation d'un premier type, B est une fonction réactive de polymérisation d'un second type et capable de réagir avec A, R est une entité hydrocarbonée comportant éventuellement des hétéroatomes, et f est le nombre total de fonctions réactives B par monomère : $f \geq 2$, de préférence $2 \leq f \leq 10$ ;
• éventuellement au moins un monomère d'espacement bifonctionnel de formule (II) suivante :

$$- A'\text{-}R'\text{-}B'$$

ou les lactames correspondants,
dans laquelle A', B', R' ont la même définition que celle donnée ci-dessus respectivement pour A, B, R dans la formule (I) ;
• éventuellement au moins un monomère « coeur » de formule (III):

$$- R^1(B\,»)_n$$

dans laquelle :

$R^1$ est un radical hydrocarboné substitué ou non, du genre silicone, alkyle linéaire ou ramifié, aromatique, alkylaryle, arylalkyle ou cycloaliphatique pouvant comprendre des insaturations et/ou des hétéroatomes ;
B » est une fonction réactive de même nature que B ou B' ;
$n \geq 1$, de préférence $1 \leq n\ 100$ ;

• et au moins un monomère de fonctionnalisation « limiteur de chaîne » répondant à la formule (IV) :

$$- R^2\text{-}A''$$

dans laquelle :

♦ A » est une fonction réactive de même nature que A ou A' ;

4. Composition selon l'une des revendications précédentes, **caractérisée en ce qu'**elle est exempte d'additifs polymère hyperbranché entraînant une diminution de la masse molaire de la matrice M supérieure ou égale à 7% par rapport à une composition témoin comprenant la même matrice M non additivée par du polymère hyperbranché, la mesure de masse molaire étant effectuée selon un protocole P déterminé.

**5.** Composition selon la revendication 4, **caractérisée en ce que** la mesure de masse molaire est effectuée sur la composition à analyser et sur la composition témoin extrudées, solidifiées puis mis sous forme de granulés.

**6.** Composition selon la revendication 4, **caractérisée en ce que** la mesure de masse molaire est effectuée sur la composition à analyser et sur la composition témoin extrudées, solidifiées, mis sous forme de granulés puis soumises à un test Qf déterminé de quantification de leur fluidité.

**7.** Composition selon la revendication 3, **caractérisée en ce que**, dans le copolyamide hyperbranché constituant l'additif polymère hyperbranché :

les entités hydrocarbonées R, R' des monomères (I) et (II) respectivement, comprennent chacune :

- au moins un radical aliphatique linéaire ou ramifié ;
- et/ou au moins un radical cycloaliphatique ;
iii. et/ou au moins un radical aromatique comportant un ou plusieurs noyaux aromatiques ;
iv. et/ou au moins un radical arylatiphatique ; ces radicaux (i), (ii), (iii), (iv) pouvant éventuellement être substitués et/ou comporter des hétéroatomes ;

A, A' est une fonction réactive du type amine, sel d'amine ou du type acide, ester, halogénure d'acide ou amide ;
B, B' est une fonction réactive du type acide, ester, halogénure d'acide ou amide ou du type amine, sel d'amine.

**8.** Composition selon la revendication 3, **caractérisée en ce que** les fonctions réactives de polymérisation A, B, A', B' du copolyamide hyperbranché sont choisies dans le groupe comprenant les fonctions carboxyliques et amines.

**9.** Composition selon l'une quelconque des revendications 3 à 8, **caractérisée en ce que** le copolyamide hyperbranché (PAHB) comprend des monomères (III) selon un rapport molaire III / I + II + IV se définissant comme suit :

$$III / I + II + IV \leq 1/150$$
et de préférence $\quad III / I + II + IV \leq 1/100$
et plus préférentiellement encore $\quad III / I + II + IV \leq 1/50$.

**10.** Composition selon l'une quelconque des revendications 3 à 9, **caractérisée en ce que** le monomère de formule (I) du copolyamide hyperbranché (PAHB) est un composé dans lequel A représente la fonction amine, B la fonction carboxylique, R un radical aromatique et f = 2.

**11.** Composition selon l'une quelconque des revendications 3 à 10, **caractérisée en ce que**, s'agissant du copolyamide hyperbranché (PAHB) :

• le monomère (I) est choisi dans le groupe comprenant :

- l'acide 5-amino-isophtalique,
- l'acide 6-amino-undécandioïque,
- le diacide 3-aminopimélique,
- l'acide aspartique,
- l'acide 3,5-diaminobenzoïque,
- l'acide 3,4-diaminobenzoïque,
- et leurs mélanges ;

• le monomère bifonctionnel de formule (II) est choisi dans le groupe comprenant :

- l'ε-caprolactame et/ou l'aminoacide correspondant: l'acide aminocaproïque,
- l'acide para ou métaaminobenzoïque,
- l'acide amino-11-undécanoïque,
- le lauryllactame et/ou l'aminoacide correspondant,
- l'acide amino-12-dodécanoïque
- et leurs mélanges ;

• le monomère « coeur » (III) est choisi dans le groupe comprenant :

- l'acide 1,3,5-benzène tricarboxylique,
- la 2,2,6,6-tétra-(β-carboxyéthyl)cyclohexanone,
- la 2,4,6-tri-(acide aminocaproïque)-1,3,5-triazine,
- la 4-aminoéthyl-1,8-octanediamine,
- et leurs mélanges ;

• le monomère de fonctionnalisation « limiteur de chaîne » (IV) est choisi dans le groupe comprenant :

- la n-hexadécylamine,
- la n-octadécylamine
- la n-dodécylamine,
- la benzylamine,
- et leurs mélanges.

**12.** Composition selon l'une quelconque des revendications 1 à 11, **caractérisée en ce que** le ou les (co)polymère(s) thermoplastique(s) constituant la matrice est (sont) choisis dans le groupe comprenant :
les polyoléfines, les polyesters, les polyoxydes d'alkylène, les polyoxyalkylènes, les polyhalogénoalkylènes, les poly (alkylène-phtalate ou téréphtalate), les poly(phény ou phénylène), poly(oxyde ou sulfure de phénylène), les acétates de polyvinyle, les alcools polyvinyliques, les halogénures de polyvinyle, les halogénures de polyvinylidène, les polyvinyles nitriles, les polyamides, les polyimides, les polycarbonates, les polysiloxanes, les polymères d'acide acrylique ou méthacrylique, les polyacrylates ou méthacrylates, les polymères naturels que sont la cellulose et ses dérivés, les polymères synthétiques tels que les élastomères synthétiques, ou les copolymères thermoplastiques comprenant au moins un monomère identique à l'un quelconque des monomères inclus dans les polymères susmentionnés, ainsi que les mélanges et/ou les alliages de tous ces (co)polymères.

**13.** Composition selon la revendication 12, **caractérisée en ce que** le ou les polymère(s) thermoplastique(s) est sélectionné dans le groupe de (co)polyamides comprenant : le Nylon 6, le Nylon 6.6, le Nylon 4, le Nylon 11, le Nylon 12, les polyamides 4-6, 6-10, 6-12, 6-36, 12-12, leurs copolymères et mélanges.

**14.** Composition selon la revendication 13, **caractérisée en ce que** le ou (les) polymère(s) thermoplastique(s) est un polyamide 6, dont la viscosité relative, mesurée à 25°C à une concentration de 0,01 g/ml dans une solution d'acide sulfurique à 96%, est supérieure à 3,5, de préférence supérieure à 3,8.

**15.** Composition selon la revendication 13, **caractérisée en ce que** le ou les polymère(s) thermoplastique(s) est un polyamide 6.6.

**16.** Composition selon l'une quelconque des revendications 1 à 15, **caractérisée en ce que** l'additif comportant le copolymère hyperbranché est présent à raison de (exprimé en % en poids sec par rapport à la masse totale de la composition) :

|  |  |
|---|---|
|  | 0,1 à 50 |
| de préférence | 1 à 20 |
| et plus préférentiellement encore | 2 à 10. |

**17.** Composition selon l'une quelconque des revendications 3 à 16, **caractérisée en ce que** l'additif comportant le copolymère hyperbranché présente une teneur en groupements terminaux acide ou amine (GT) (exprimé en méq/kg) comprise entre 0 et 25.

**18.** Composition selon l'une des revendications précédentes, **caractérisée en ce que** les radicaux $R^2$ sont du même type dans tout le polymère hyperbranché

**19.** Composition selon l'une quelconque des revendications 1 à 18, **caractérisée en ce qu'**elle comprend au moins une charge de renfort et/ou de remplissage choisie dans le groupe comprenant les charges fibreuses telles que les fibres de verre, les charges minérales ou en matière thermo-durcissable, et les charges en poudre telles que le talc.

20. Articles obtenus par mise en forme, de préférence par moulage, moulage par injection, injection/soufflage extrusion/ soufflage, extrusion ou filage, de la composition selon l'une quelconque des revendications 1 à 19.

21. Articles selon la revendication 20, **caractérisés en ce qu'**ils sont obtenus par moulage de la composition selon l'une quelconque des revendications 1 à 19.

22. Articles selon la revendication 20, **caractérisés en ce que** ce sont des fils, des fibres des films ou des filaments.

23. Utilisation à titre d'agent modificateur du comportement rhéologique d'une matrice M polymère thermoplastique, du polymère hyperbranché fonctionnalisé tel que défini dans les revendications précédentes.

**Claims**

1. Thermoplastic polymer composition, **characterized in that** it comprises:

☐ a matrix M based on at least one thermoplastic polymer,
☐ and at least one hyperbranched polymer additive for modifying the rheological behaviour, comprising at least one polymer:

➢ which is functionalized,
➢ which is hyperbranched,
➢ at least 50% of the end groups of this hyperbranched polymer are functionalized with $R^2$,
➢ $R^2$ being a substituted or unsubstituted hydrocarbon-based radical of the silicone, linear or branched alkyl, aromatic, arylalkyl, alkylaryl or cycloaliphatic type which may comprise one or more unsaturations and/or one or more hetero atoms.

2. Composition according to Claim 1, **characterized in that** the hyperbranched polymer is chosen from polyesters, polyesteramides and polyamides.

3. Composition according to either of the preceding claims, **characterized in that** the hyperbranched polymer additive is a hyperbranched polyamide comprising at least one hyperbranched copolyamide of the type obtained by reaction between:

• at least one monomer of formula (I) below:

$$- A\text{-}R\text{-}B_f$$

in which A is a polymerization-reactive function of a first type, B is a polymerization-reactive function of a second type that is capable of reacting with A, R is a hydrocarbon-based species optionally comprising hetero atoms, and f is the total number of reactive functions B per monomer: $f \geq 2$, preferably $2 \leq f \leq 10$;
• optionally at least one difunctional spacer monomer of formula (II) below:

$$- A'\text{-}R'\text{-}B'$$

or the corresponding lactams,
in which A', B' and R' have the same meaning as that given above for A, B and R, respectively in formula (I);
• optionally at least one "core" monomer of formula (III):

$$- R^1(B'')_n$$

in which:

$R^1$ is a substituted or unsubstituted hydrocarbon-based radical of the silicone, linear or branched alkyl, ...atic, alkylaryl, arylalkyl or cycloaliphatic type which may comprise unsaturations and/or hetero atoms;
B'' is a reactive function of the same nature as B or B' ;
$n \geq 1$, preferably $1 \leq n \leq 100$; and

at least one "chain-limiting" functionalization monomer corresponding to formula (IV):

$$- R^2\text{-}A''$$

in which:

♦ A" is a reactive function of the same nature as A or A'.

4. Composition according to one of the preceding claims, **characterized in that** it is free of hyperbranched polymer additives, resulting in a reduction of the molar mass of the matrix M of greater than or equal to 7% relative to a control composition comprising the same matrix M not supplemented with hyperbranched polymer, the molar mass measurement being performed according to a given protocol P.

5. Composition according to Claim 4, **characterized in that** the molar mass measurement is performed on the composition to be analysed and on the control composition, which are extruded, solidified and then formed into granules.

6. Composition according to Claim 4, **characterized in that** the molar mass measurement is performed on the composition to be analysed and on the control composition, which are extruded, solidified, formed into granules and then subjected to a given test Qf for quantification of their flow index.

7. Composition according to Claim 3, **characterized in that**, in the hyperbranched copolyamide constituting the hyperbranched polymer additive:

the hydrocarbon-based species R and R' of the monomers (I) and (II) respectively, each comprise:

i. at least one linear or branched aliphatic radical;
ii. and/or at least one cycloaliphatic radical;
iii. and/or at least one aromatic radical comprising one or more aromatic nuclei;
iv. and/or at least one arylaliphatic radical;
these radicals (i), (ii), (iii) and (iv) possibly being substituted and/or comprising hetero atoms;

A or A' is a reactive function of the amine or amine salt type or of the acid, ester, acid halide or amide type;
B or B' is a reactive function of the acid, ester, acid halide or amide type or of the amine or amine salt type.

8. Composition according to Claim 3, **characterized in that** the polymerization-reactive functions A, B, A' and B' of the hyperbranched copolyamide are chosen from the group comprising carboxylic and amine functions.

9. Composition according to any one of Claims 3 to 8, **characterized in that** the hyperbranched copolyamide (HBPA) comprises monomers (III) in a III/I+II+IV molar ratio defined as follows:
III/I+II+IV ≤ 1/150
and preferably III/I+II+IV ≤ 1/100
and even more preferably III/I+II+IV ≤ 1/50.

10. Composition according to any one of Claims 3 to 9, **characterized in that** the monomer of formula (I) of the hyperbranched copolyamide (HBPA) is a compound in which A represents the amine function, B represents the carboxylic function, R represents an aromatic radical and f = 2.

11. Composition according to any one of Claims 3 to 10, **characterized in that**, as regards the hyperbranched copolyamide (HBPA):

● the monomer (I) is chosen from the group comprising:

- 5-amino-isophthalic acid,
- 6-amino-undecanedioic acid,
- 3-aminopimelic diacid,
- aspartic acid,
- 3,5-diaminobenzoic acid,

- 3, 4-diaminobenzoic acid,
- and mixtures thereof;

● the difunctional monomer of formula (II) is chosen from the group comprising:

- ε-caprolactam and/or the corresponding amino acid; aminocaproic acid,
- para- or meta-aminobenzoic acid,
- 11-amino-undecanoic acid,
- lauryllactam and/or the corresponding amino acid,
- 12-aminododecanoic acid,
- and mixtures thereof;

● the "core" monomer (III) is chosen from the group comprising:

- 1,3,5-benzenetricarboxylic acid,
- 2,2, 6,6-tetra(β-carboxyethyl)cyclohexanone,
- 2,4,6-tri(aminocaproic acid)-1,3,5-triazine,
- 4-aminoethyl-1,8-octanediamine,
- and mixtures thereof;

● the "chain-limiting" functionalization monomer (IV) is chosen from the group comprising:

- n-hexadecylamine,
- n-octadecylamine,
- n-dodecylamine,
- benzylamine,
- and mixtures thereof.

12. Composition according to any one of Claims 1 to 11, **characterized in that** the thermoplastic (co)polymer(s) constituting the matrix is (are) chosen from the group comprising:
polyolefins, polyesters, polyalkylene oxides, polyoxyalkylenes, polyhalogenoalkylenes, poly(alkylene-phthalates or terephthalates), poly(phenyl or phenylenes), poly(phenylene oxide or sulphide), polyvinyl acetates, polyvinyl alcohols, polyvinyl halides, polyvinylidene halides, polyvinyl nitriles, polyamides, polyimides, polycarbonates, polysiloxanes, acrylic or methacrylic acid polymers, polyacrylates or polymethacrylates, natural polymers, namely cellulose and its derivatives, synthetic polymers such as synthetic elastomers, or thermoplastic copolymers comprising at least one monomer that is identical to any of the monomers included in the abovementioned polymers, and also blends and/or alloys of all these co (polymers) .

13. Composition according to Claim 12, **characterized in that** the thermoplastic polymer(s) is (are) selected from the group of (co)polyamides comprising: nylon 6, nylon 6,6, nylon 4, nylon 11, nylon 12, polyamides 4-6, 6-10, 6-12, 6-36 and 12-12, and copolymers and blends thereof.

14. Composition according to Claim 13, **characterized in that** the thermoplastic polymer(s) is (are) a polyamide 6, the relative viscosity of which, measured at 25°C at a concentration of 0.01 g/ml in a 96% sulphuric acid solution, is greater than 3.5 and preferably greater than 3.8.

15. Composition according to Claim 13, **characterized in that** the thermoplastic polymer(s) is (are) a polyamide 6,6.

16. Composition according to any one of Claims 1 to 15, **characterized in that** the additive comprising the hyperbranched copolymer is present in a proportion (expressed as % by dry weight relative to the total mass of the composition) of:
0.1 to 50
preferably 1 to 20
and even more preferably 2 to 10.

17. Composition according to any one of Claims 3 to 16, **characterized in that** the additive comprising the hyperbranched copolymer has a content of acid or amine end groups (EG) (expressed in meq/kg) of between 0 and 25.

18. Composition according to one of the preceding claims, **characterized in that** the radicals $R^2$ are of the same type throughout the hyperbranched polymer.

19. Composition according to any one of Claims 1 to 18, **characterized in that** it comprises at least one reinforcing filler and/or bulking filler chosen from the group comprising fibrous fillers such as glass fibre, mineral fillers or fillers made of thermosetting material, and powder fillers such as talc.

20. Articles obtained by forming, preferably by moulding, injection-moulding, injection blow-moulding, extrusion blow-moulding, extrusion or spinning, the composition according to any one of Claims 1 to 19.

21. Articles according to Claim 20, **characterized in that** they are obtained by moulding the composition according to any one of Claims 1 to 19.

22. Articles according to Claim 20, **characterized in that** they are yarns, fibres, films or filaments.

23. Use, as an agent for modifying the rheological behaviour of a thermoplastic polymer matrix M, of the functionalized hyperbranched polymer as defined in the preceding claims.

**Patentansprüche**

1. Thermoplastische Polymerzusammensetzung, **dadurch gekennzeichnet, dass** sie umfasst:

   ☐ eine Matrix M auf der Basis von wenigstens einem thermoplastischen Polymer,
   ☐ und wenigstens ein hyperverzweigtes Polymeradditiv, das das rheologische Verhalten modifiziert, umfassend wenigstens ein Polymer:

   ➢ das funktionalisiert ist
   ➢ das hyperverzweigt ist,
   ➢ wobei wenigstens 50 % der endständigen Gruppen dieses hyperverzweigten Polymers mit $R^2$ funktionalisiert sind,
   ➢ wobei $R^2$ ein substituierter oder nicht substituierter Kohlenwasserstoffrest der Art Silikon, lineares oder verzweigtes Alkyl, Aromat, Arylalkyl, Alkylaryl oder Cycloaliphat ist, der eine oder mehrere ungesättigte Bindungen und/oder ein oder mehrere Heteroatome umfassen kann.

2. Zusammensetzung gemäß Anspruch 1, **dadurch gekennzeichnet, dass** das hyperverzweigte Polymer unter den Polyestern, den Polyesteramiden, den Polyamiden ausgewählt ist.

3. Zusammensetzung gemäß einem der vorhergehenden Ansprüche, **dadurch gekennzeichnet, dass** das hyperverzweigte Polymeradditiv ein hyperverzweigtes Polyamid ist, das wenigstens ein hyperverzweigtes Copolyamid vom Typ derjenigen umfasst, die erhalten werden durch Reaktion zwischen:

   • wenigstens einem Monomer der folgenden Formel (I):

   $$- A\text{-}R\text{-}B_f$$

   worin A eine reaktive Polymerisationsfunktion eines ersten Typs ist, B eine reaktive Polymerisationsfunktion eines zweiten Typs ist und mit A reagieren kann, R eine Kohlenwasserstoffeinheit ist, die gegebenenfalls Heteroatome umfasst, und f die Gesamtanzahl an reaktiven Funktionen B pro Monomer ist: $f \geq 2$, vorzugsweise $2 \leq f \leq 10$;
   • gegebenenfalls wenigstens einem bifunktionellen Abstandsmonomer der folgenden Formel (II):

   $$- A'\text{-}R'\text{-}B'$$

   oder die entsprechenden Laktame,
   worin A', B', R' die gleiche Definition wie diejenige haben, die oben jeweils für A, B, R in der Forrnel (I) angegeben ist;
   • gegebenenfalls wenigstens einem "Kem"-Monomer der Formel (III):

$$- R^1(B»)_n$$

worin:

  $R^1$ ein substituierter oder nicht substituierter Kohlenwasserstoffrest der Art Silikon, lineares oder verzweigtes Alkyl, Aromat, Alkylaryl, Arylalkyl oder Cycloaliphat ist, der ungesättigte Bindungen und/oder

  roatome umfassen kann;
  B» eine reaktive Funktion der gleichen Art wie B oder B' ist;
  $n \geq 1$, vorzugsweise $1 \leq n \leq 100$;

• und wenigstens einem Monomer zur "kettenbegrenzenden" Funktionalisierung, das der Formel (IV):

$$-R^2-A"$$

entspricht, worin:

  ♦ A» eine reaktive Funktion der gleichen Art wie A oder A' ist.

**4.** Zusammensetzung gemäß einem der vorhergehenden Ansprüche, **dadurch gekennzeichnet, dass** sie frei ist von hyperverzweigten Polymeradditiven, die eine Verringerung der Molmasse der Matrix M von mehr als oder gleich 7 %, bezogen auf eine Vergleichszusammensetzung, die die gleiche Matrix M, die nicht mit hyperverzweigtem Polymer versetzt ist, umfasst, zur Folge haben, wobei die Messung der Molmasse gemäß einem festgelegten Protokoll P ausgeführt wird.

**5.** Zusammensetzung gemäß Anspruch 4, **dadurch gekennzeichnet, dass** die Messung der Molmasse ausgeführt wird an der zu analysierenden Zusammensetzung und an der Vergleichszusammensetzung, die extrudiert, erstarrt, dann in Granulatform gebracht sind.

**6.** Zusammensetzung gemäß Anspruch 4, **dadurch gekennzeichnet, dass** die Messung der Molmasse ausgeführt wird an der zu analysierenden Zusammensetzung und an der Vergleichszusammensetzung, die extrudiert, erstarrt, in Granulatform gebracht sind und dann einem festgelegten Qf-Test zur Quantifizierung ihrer Fließfähigkeit unterzogen wurden.

**7.** Zusammensetzung gemäß Anspruch 3, **dadurch gekennzeichnet, dass** in dem hyperverzweigten Copolyamid, das das hyperverzweigte Polymeradditiv darstellt:

  die Kohlenwasserstoffeinheiten R, R' der Monomere (I) beziehungsweise (II) jeweils umfassen:

    - wenigstens einen linearen oder verzweigten aliphatischen Rest;
    - und/oder wenigstens einen cycloaliphatischen Rest;
    iii. und/oder wenigstens einen aromatischen Rest, der einen oder mehrere aromatische Ringe umfasst;
    iv. und/oder wenigstens einen arylaliphatischen Rest;
    wobei diese Reste (i), (ii), (iii), (iv) gegebenenfalls substituiert sein können und/oder Heteroatome umfassen können;

  A, A' eine reaktive Funktion vom Typ Amin, Salz eines Amins oder vom Typ Säure, Ester, Säurehalogenid oder Amid ist;
  B, B' eine reaktive Funktion vom Typ Säure, Ester, Säurehalogenid oder Amid oder vom Typ Amin, Salz eines Amins ist.

**8.** Zusammensetzung gemäß Anspruch 3, **dadurch gekennzeichnet, dass** die reaktiven Polymerisationsfunktionen A, B, A', B' des hyperverzweigten Copolyamids aus der Gruppe ausgewählt sind, die die Carboxyl- und Aminfunktionen umfasst.

**9.** Zusammensetzung gemäß einem der Ansprüche 3 bis 8, **dadurch gekennzeichnet, dass** das hyperverzweigte Copolyamid (PAHB) Monomere (III) gemäß einem Molverhältnis III / I + II + IV umfasst, das wie folgt definiert ist:

$$III / I + II + N \leq 1/150$$

und bevorzugt $\qquad III / I + II + IV \leq 1/100$

und noch stärker bevorzugt $\qquad III / I + II + IV \leq 1/50.$

**10.** Zusammensetzung gemäß einem der Ansprüche 3 bis 9, **dadurch gekennzeichnet, dass** das Monomer der Formel (I) des hyperverzweigten Copolyamids (PAHB) eine Verbindung ist, in der A die Aminfunktion darstellt, B die Carboxylfunktion, R einen aromatischen Rest und f = 2.

**11.** Zusammensetzung gemäß einem der Ansprüche 3 bis 10, **dadurch gekennzeichnet, dass** bei dem hyperverzweigten Copolyamid (PAHB):

• das Monomer (I) aus der Gruppe ausgewählt ist, die umfasst:

- 5-Amino-isophthalsäure,
- 6-Amino-undecandisäure,
- die Disäure 3-Aminopimelinsäure,
- Asparaginsäure,
- 3,5-Diaminobenzoesäure,
- 3,4-Diaminobenzoesäure
- und ihre Gemische;

• das bifunktionelle Monomer der Formel (II) aus der Gruppe ausgewählt ist, die umfasst:

- ε-Caprolaktam und/oder die entsprechende Aminosäure: Aminocapronsäure,
- para- oder meta-Aminobenzoesäure,
- Amino-11-undecansäure,
- Lauryllaktam und/oder die entsprechende Aminosäure,
- Amino-12-dodecansäure
- und ihre Gemische;

• das "Herz"-Monomer (III) aus der Gruppe ausgewählt ist, die umfasst:

- 1,3,5-Benzentricarbonsäure,
- 2,2,6,6-Tetra-(β-carboxyethyl)cyclohexanon,
- 2,4,6-Tri-(Aminocapronsäure)-1,3,5-triazin,
- 4-Aminoethyl-1,8-octandiamin
- und ihre Gemische;

• das Monomer zur "kettenbegrenzenden" Funktionalisierung (IV) aus der Gruppe ausgewählt ist, die umfasst:

- n-Hexadecylamin,
- n-Octadecylamin,
- n-Dodecylamin,
- Benzylamin
- und ihre Gemische.

**12.** Zusammensetzung gemäß einem der Ansprüche 1 bis 11, **dadurch gekennzeichnet, dass** das oder die thermoplastische(n) (Co)polymer(e), das(die) die Matrix bildet(bilden), aus der Gruppe ausgewählt ist(sind), die umfasst: die Polyolefine, die Polyester, die Polyalkylenoxide, die Polyoxyalkylene, die Polyhalogenalkylene, Poly(alkylen-phthalat oder -terephthalat), Poly(phenyl oder -phenylen), Poly(phenylenoxid oder -sulfid), die Polyvinylacetate, die Polyvinylalkohole, die Polyvinylhalogenide, die Polyvinylidenhalogenide, die Polyvinylnitrile, die Polyamide, die Polyimide, die Polycarbonate, die Polysiloxane, die Acryl- oder Methacrylsäurepolymere, die Polyacrylate oder -methacrylate, die natürlichen Polymere, wie Cellulose und ihre Derivate, die synthetischen Polymere, wie die synthetischen Elastomere, oder die thermoplastischen Copolymere, die wenigstens ein Monomer umfassen, das mit einem beliebigen der in den oben erwähnten Polymeren eingeschlossenen Monomere identisch ist, sowie die Gemische und/oder die Legierungen aller dieser (Co)polymere.

13. Zusammensetzung gemäß Anspruch 12, **dadurch gekennzeichnet, dass** das oder die thermoplastische(n) Polymer(e) aus der Gruppe von (Co)polyamiden ausgewählt ist, die umfasst: Nylon 6, Nylon 6.6, Nylon 4, Nylon 11, Nylon 12, die Polyamide A-8, 6-10, 6-12, 8-36, 12-12, ihre Copolymere und Gemische.

14. Zusammensetzung gemäß Anspruch 13, **dadurch gekennzeichnet, dass** das oder die thermoplastische(n) Polymer(e) ein Polyamid 6 ist, dessen relative Viskosität, gemessen bei 25 °C mit einer Konzentration von 0,01 g/ml in einer 96%-igen Schwefelsäurelösung, höher als 3,5, vorzugsweise höher als 3,8 ist.

15. Zusammensetzung gemäß Anspruch 13, **dadurch gekennzeichnet, dass** das oder die thermoplastische(n) Polymer(e) ein Polyamid 6.6 ist

16. Zusammensetzung gemäß einem der Ansprüche 1 bis 15, **dadurch gekennzeichnet, dass** das Additiv, das das hyperverzweigte Copolymer umfasst, in einer Menge (ausgedrückt in % Trockengewicht in Bezug auf die Gesamtmasse der Zusammensetzung) von

|  |  |
|---|---|
|  | 0,1 bis 50 |
| vorzugsweise | 1 bis 20 |
| und noch stärker bevorzugt | 2 bis 10 vorliegt. |

17. Zusammensetzung gemäß einem der Ansprüche 3 bis 16, **dadurch gekennzeichnet, dass** das Additiv, das das hyperverzweigte Copolymer umfasst, einen Gehalt an endständigen Säure- oder Amingruppen (GT) (ausgedrückt in meq/kg) zwischen 0 und 25 aufweist.

18. Zusammensetzung gemäß einem der vorhergehenden Ansprüche, **dadurch gekennzeichnet, dass** die Reste $R^2$ im gesamten hyperverzweigten Polymer vom gleichen Typ sind.

19. Zusammensetzung gemäß einem der Ansprüche 1 bis 18, **dadurch gekennzeichnet, dass** sie wenigstens einen Füllstoff zum Verstärken und/oder zum Auffüllen umfasst, der aus der Gruppe ausgewählt ist, die die faserförmigen Füllstoffe, wie die Glasfasern, die anorganischen Füllstoffe oder die aus thermohärtbarem Material, und die pulverförmigen Füllstoffe, wie Talk, umfasst.

20. Gegenstände, erhalten durch Formgebung, vorzugsweise durch Gießen, Spritzgießen, Spritzblasen, Extrusionsblasen, Extrusion oder Spinnen der Zusammensetzung gemäß einem der Ansprüche 1 bis 19.

21. Gegenstände gemäß Anspruch 20, **dadurch gekennzeichnet, dass** sie durch Gießen der Zusammensetzung gemäß einem der Ansprüche 1 bis 19 erhalten werden.

22. Gegenstände gemäß Anspruch 20, **dadurch gekennzeichnet, dass** dies Fäden, Fasern, Filme oder Filamente sind.

23. Verwendung des wie in den vorhergehenden Ansprüchen definierten funktionalisierten hyperverzweigten Polymers als Modifikator des rheologischen Verhaltens einer thermoplastischen Polymermatrix M.

Fig 1

Fig 2

Fig 3